(19) Europäisches Patentamt
European Patent Office
Office européen des brevets

(11) Veröffentlichungsnummer: **0 194 349**
**A2**

(12) # EUROPÄISCHE PATENTANMELDUNG

(21) Anmeldenummer: **85115491.4**

(22) Anmeldetag: **05.12.85**

(51) Int. Cl.⁴: **C 08 G 18/28**
C 08 G 18/32, C 08 G 18/48
C 08 G 18/76, B 01 F 17/00
C 07 C 125/06, C 07 C 127/1-9
C 09 B 67/46

(30) Priorität: **18.12.84 DE 3446084**

(43) Veröffentlichungstag der Anmeldung:
**17.09.86 Patentblatt 86/38**

(84) Benannte Vertragsstaaten:
**CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Dietz, Erwin, Dr.**
**St.-Matthäus-Strasse 7**
**D-6233 Kelkheim (Taunus)(DE)**

(72) Erfinder: **Münkel, Albert**
**Sindlinger Bahnstrasse 127a**
**D-6230 Frankfurt am Main 80(DE)**

(72) Erfinder: **Hafner, Otmar**
**Zum Talblick 27**
**D-6246 Glashütten/Taunus(DE)**

(72) Erfinder: **Rieper, Wolfgang, Dr.**
**Sternstrasse 11**
**D-6000 Frankfurt am Main 1(DE)**

(72) Erfinder: **Kroh, Adolf**
**Vorderstrasse 27**
**D-6251 Selters/Taunus(DE)**

(54) **Additionsverbindungen und Verfahren zu ihrer Herstellung.**

(57) Aus polymeren Diphenylmethan-4, 4'-diisocyanaten, Aminen, einwertigen und zweiwertigen Polymeren entstehen Additionsverbindungen, welch sich als Dispergatoren für Feststoffe in organischen Medien eignen.

EP 0 194 349 A2

## Additionsverbindungen und Verfahren zu ihrer Herstellung

Die vorliegende Erfindung betrifft Additionsverbindungen bestehend aus

50 Äquivalent-% Struktureinheiten R der Formel

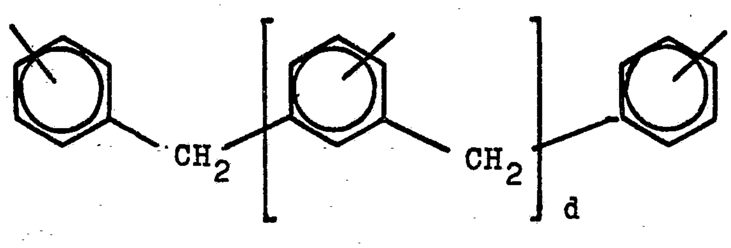
,

5 bis 40, vorzugsweise 7 bis 35 Äquivalent-% Struktureinheiten der Formel (I)

$-NH-CO-R^1-R^3-R^2$ (I)

5 bis 40, vorzugsweise 7 bis 30 Äquivalent-% Struktureinheiten der Formel (II)

$-NH-CO-(R^4)_a-R^5-R^6$ (II)

0 bis 25, vorzugsweise 0 bis 15 Äquivalent-% Struktureinheiten der Formel (III)

$-NH-CO-(R^4)_a-R^7$ \
$R^9$ (III)
$H-(R^4)_b-R^8$ /

und/oder

0 bis 25, vorzugsweise 1 bis 15 Äquivalent-% Struktureinheiten der Formel (IV)

$-NH-CO-(R^4)_a-R^7$ \
$R^9$ (IV),
$-NH-CO-(R^4)_b-R^8$ /

wobei (III) und (IV) nicht gleichzeitig 0 Äquivalent-% sein können und die Summe (I) + (II) + (III) + (IV) 50 Äquivalent-% beträgt, mit einem Molekulargewicht von 1 500 bis 25 000, löslich in inerten Lösemitteln, wobei

d für eine ganze Zahl von 0 bis 6,

$R^1$ für eine direkte Bindung, -O-, $-NR^{10}R^{11}-$, worin $R^{10}$ eine direkte Bindung oder $C_1$-$C_{20}$-Alkylen und $R^{11}$ -H, -OH oder $-NH_2$ bedeuten,

$R^2$ für -H, -OH oder $-N(R^3R^{11})(R^{10}R^{12})$, worin $R^{10}$ und $R^{11}$ die obige Bedeutung haben und $R^{12}$ -H, -OH oder $-NH_2$ und

$R^3$ eine direkte Bindung oder $C_1$-$C_6$-Alkylen bedeuten, oder

$R^2$ für ein gesättigtes oder ungesättigtes heterocyclisches oder ein aromatisches Ringsystem mit 2 bis 16 C-Atomen, welches gegebenenfalls substituiert sein kann durch $-R^{13}$, Halogen, $-OR^{13}$, $-NR^{13}R^{14}$, $-COOR^{13}$, $-CONR^{13}R^{14}$, $-NR^{13}-COR^{14}$, -CN, $-CF_3$ oder $-NO_2$, wobei $R^{13}$ und $R^{14}$ unabhängig voneinander -H oder $C_1$-$C_4$-Alkyl bedeuten, und wobei mindestens einer der Reste $R^1$ und $R^2$ ein Stickstoffatom enthalten muß und $R^1$ nur dann eine direkte Bindung ist, wenn $R^2$ für ein heterocyclisches Ringsystem steht, welches über den Ringstickstoff verknüpft ist, und $R^3$ ebenfalls für eine direkte Bindung steht,

$R^4$ unabhängig voneinander für $-O-R^{15}-$, $-O-R^{15}-CO-$ oder $-O-R^{15}-O-CO-R^{16}-CO-$, wobei $R^{15}$ $C_2$-$C_{20}$-Alkylen oder Phenylethylen und $R^{16}$ eine direkte Bindung, $C_1$-$C_{12}$-Alkylen, $C_6$-$C_{12}$-Arylen oder $C_6$-$C_{12}$-Aralkylen bedeutet, und wobei die Reste $R^4$ in den Formeln (II), (III) und (IV) jeweils verschieden sein können,

a für eine ganze Zahl von 2 bis 200,

$R^5$ für -O-, -S-, -NH- oder -NR'-, wobei R' eine der für $R^6$ genannten Bedeutungen hat,

$R^6$ für einen einwertigen aliphatischen, aromatischen oder araliphatischen Rest mit 1 bis 40 C-Atomen, und

$R^7$ und $R^8$ unabhängig voneinander für -O-, -S-, -NR"- oder eine direkte Bindung, wobei R" eine der für $R^6$ genannten Bedeutungen hat,

$R^9$ für eine direkte Bindung oder einen zweiwertigen aliphatischen oder araliphatischen Rest mit 2 bis 200 C-Atomen, wobei $R^7$, $R^8$ und $R^9$ nicht gleichzeitig eine direkte Bindung sein sollen, und

b für eine ganze Zahl von 2 bis 200 stehen.

Unter Äquivalent-% wird der Quotient

$$\frac{[\text{Äquivalente von an reagierende Gruppen gebundenen Struktureinheiten}] \times 100\ \%}{[\text{Summe aller Äquivalente von an reagierende Gruppen gebundener Struktureinheiten}]}$$

verstanden.

Unter anderem haben die Verbindungen folgende Strukturen (V), (VI) und (VII)

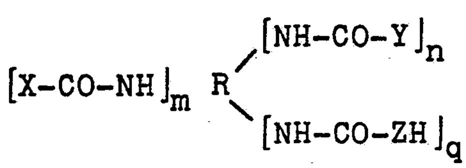

(V)

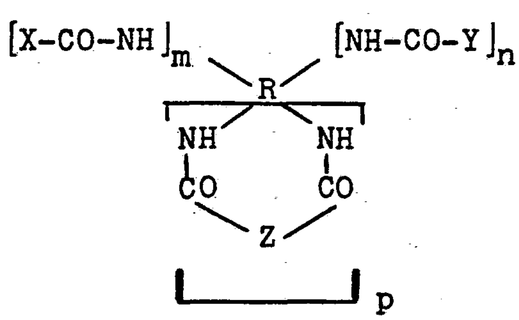

(VI)

0194349

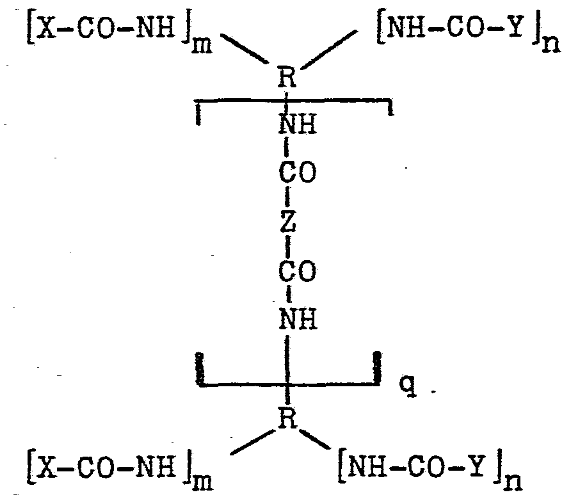

(VII)

in welchen n + m + q bzw. n + m + p für eine Zahl von 2 bis 8, entsprechend der Wertigkeit des Restes R,

X für $-R^1-R^3-R^2$,
Y für $-(R^4)_a-R^5-R^6$ und
Z für 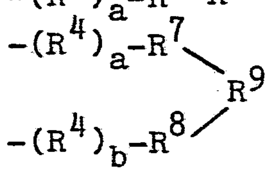 stehen.

Es sind bereits Polyester bekannt, die sich als Hilfsmittel zur Dispergierung von Feststoffen in organischen Lösemittel eignen (vgl. US-Patentschrift 3.970.687). Sie entsprechen der allgemeinen Formel

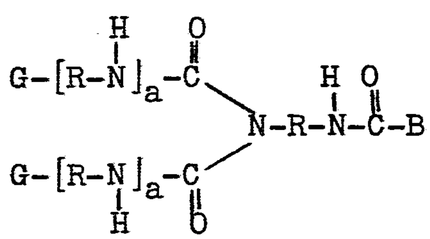

,

worin G der Rest eines basischen Radikals und B ein Segment eines Polyesters oder Copolyesters ist.

Sie entstehen durch Kondensation eines Polyesters mit endständiger OH-Gruppe mit einem Triisocyanat.

Weiterhin sind polymere Materialien bekannt, die sich ebenfalls als Hilfsmittel zur Dispergierung von Feststoffen in

organischen Lösemitteln eignen (vgl. US-Patentschrift 4.032.698). Sie entsprechen der allgemeinen Formel

$$[Q-X-\overset{O}{\overset{\|}{C}}-NH]_m-Y-[\overset{H}{N}-\overset{O}{\overset{\|}{C}}-A]_n$$

worin

Q der Rest eines Polymers eines ethylenisch ungesättigten Monomers,
X der Rest eines Kettenübertragungsmittels,
Y der Rest eines Di-, Tri- oder Tetraisocyanats nach Entfernung der Isocyanatgruppen, und
A der Rest einer Base, welche vor Reaktion einen $pK_a$-Wert von 5 bis 14 hatte, darstellt.

Diese Verbindungen lösen sich gut in organischen Lösemitteln.

Diese Hilfsmittel für die Dispergierung von Feststoffen führen bei einer Reihe von Pigmenten und Bindemittelsystemen nur zu geringen oder keinen Verbesserungen der anwendungstechnischen Eigenschaften (Flockungsbeständigkeit, Glanzverhalten, Farbstärke, Verträglichkeit mit Bindemitteln und rheologische Eigenschaften).

Die erfindungsgemäßen Additionsverbindungen besitzen dagegen eine gute Verträglichkeit mit zahlreichen Bindemittelsystemen. Die darin dispergierten Feststoffe, insbesondere Pigmente, zeichnen sich durch eine hohe Flockungsbeständigkeit und hohe Farbstärke aus. Die auf diese Weise pigmentierten Bindemittelsysteme weisen gute rheologische Eigenschaften auf und führen zu Lackfilmen mit hohem Glanz.

Die erfindungsgemäßen Addtionsverbindungen werden aus polyfunktionellen Isocyanaten und den Komponenten HX, HY und HZH aufgebaut, wobei X, Y und Z die bereits genannte Bedeutung haben.

1. Die erfindungsgemäß einzusetzenden polyfunktionellen Isocyanate lassen sich in bekannter Weise durch Phosgenierung von Kondensationsprodukten aus Anilin und Formaldehyd aufbauen. Sie haben die idealisierte Struktur

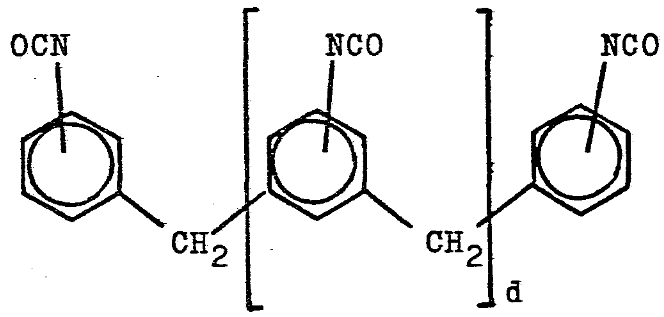

(VIII),

wobei die Zahl d für eine ganze Zahl von 0 bis 6 steht.

2. Erfindungsgemäße Additionsverbindungen enthalten den einwertigen Rest einer Aminverbindung, welche Gruppen enthält, die mit Isocyanatgruppen reagieren können. Diese Aminverbindungen HX können in folgender allgemeiner Formel zusammengefaßt werden:

$$H-R^1-R^3-R^2 \qquad (IX)$$

In dieser Formel haben $R^1$, $R^2$ und $R^3$ die bereits angeführte Bedeutung.

Beispiele von Aminen der Formel (IX) sind folgende Vertreter:

2.1. Aliphatische Amine, bei welchen in Formel (IX) $R^2$ für -H, -OH oder $-N(R^3R^{11})(R^{10}R^{12})$ steht, wie

Ammoniak, Hydrazin, Hydroxylamin, Ethanolamin, Diethanolamin, Triethanolamin, Hydroxyethyldimethylamin, 1,2-Diaminoethan, Diethylentriamin, Dimethyl-(2-aminoethyl)-amin, Diethyl-(2-aminoethyl)-amin, Hydroxyethyldiethylamin, Alkyl- und Alkenylamine mit 1 bis 20 C-Atomen sowie deren Hydroxyethyl- und Aminopropylderivate.

2.2. Aromatische Amine, bei welchen in Formel (IX) $R^2$ für ein aromatisches Ringsystem steht, welches die bereits aufgeführten Substituenten tragen kann, wie Anilin, Alkylaniline (Toluidine, Xylidine und N-Alkylaniline), Chlor-, Dichlor- und Trichloraniline, Brom- und Fluoraniline, Aminobenzotrifluoride, Aminophenole und -phenolether (Anisidine und Phenetidine), Aminohydrochinondimethylether, Aminoresorcindimethylether, Aminobenzoesäureester, Aminobenzamide, Aminophthalsäureester, Aminobenzonitrile, Nitraniline und Dinitraniline, Aminodimethylaniline, Aminonaphthole, Aminoanthrachinone, Aminooxazolinone und Aminobenzoxazolinone und insbesondere heterocyclische Aminverbindungen wie beispielsweise Aminopyridine, Aminocarbazole, Aminochinoline, Aminoacridine, Aminopyrimidine, Aminochinoxaline, Aminopteridine, Aminopurine (Adenin), Aminotriazole, Aminobenzimidazole, Aminothiazole, Aminopyrazole und -pyrazolone, Aminothiadiazole.

2.3. Heterocyclische Amine, bei welchen in Formel (IX) $R^2$ für ein heterocyclisches Ringsystem und $R^3$ für eine Alkylengruppe mit 1 bis 6 C-Atomen steht, wie

1-(2-Hydroxyethyl)-pyrrolidin, 2-(1-Pyrrolidyl)-ethylamin, 1-(2-Hydroxyethyl)-piperidin, 2-(1-Piperidyl)-ethylamin, 1-(2-Aminopropyl)-piperidin, N-(2-Hydroxyethyl)-hexamethylenimin, 4-(2-Hydroxyethyl)-morpholin, 2-(4-Morpholinyl)-ethylamin, 4-(3-Aminopropyl)-morpholin, 1-(2-Hydroxyethyl)-piperazin, 1-(2-Aminoethyl)-piperazine, 1-(2-Hydroxyethyl)-2-alkylimidazoline, 1-(3-Aminopropyl)-imidazol, (2-Aminoethyl)-pyridine, (2-Hydroxyethyl)-pyridine, (3-Hydroxypropyl)-pyridine, (Hydroxymethyl)-pyridine, Picolylamine und N-Methyl-2-hydroxymethyl-piperidin.

2.4. Heterocyclische Amine, bei welchen in Formel IX $R^1$ und $R^3$ für eine direkte Bindung stehen, wie unsubstituierte und substituierte Pyrrolidine, Piperidine, Hexamethylenimine, Morpholine, Imidazolidine, Imidazoline, Imidazole, 2-Alkylimidazole und -imidazoline.

Bevorzugt sind aromatische Amine und heterocyclische Amine, insbesondere hydroxy- oder aminoalkylheterocyclische Amine der Gruppe 2.3.

3. Erfindungsgemäße Additionsverbindungen enthalten einen einwertigen Rest eines Polymeren der Formel HY. Y steht in dieser Formel für einen polymeren Rest folgender Struktur

$$-(R^4)_a-R^5-R^6 \qquad (X)$$

worin $R^4$, $R^5$, $R^6$ und a die schon angegebene Bedeutung haben.

Zur Herstellung der Verbindungen der Formel HY gibt es verschiedene Wege. Bevorzugt sind folgende Verfahren und Gruppen von Verbindungen:

3.1. Additionsprodukte von Alkylenoxiden bzw. Aralkylenoxiden an monofunktionelle Starter wie Alkohole, aromatische Hydroxyverbindungen und sekundäre Amine. Bevorzugte Verbindungen werden durch Anlagerung von Ethylen- und/oder Propylenoxid gewonnen, doch können zur Oxalkylierung auch andere Alkylenoxide wie Butylenoxid, Styroloxid, Tetrahydrofuran und Hexamethylenoxid verwendet werden. Werden mehrere Alkylenoxide z.B. Ethylen- und Propylenoxid angelagert, so können sie bei der Oxalkylierung entweder als Gemisch oder nacheinander im einfachen oder mehrmaligen Wechsel

eingesetzt werden. Besonders bevorzugt sind Addukte von Ethylen- und/oder Propylenoxid an Alkohole, Phenole, Naphthole, Alkylphenole und -naphthole sowie Dialkylamine mit 1 bis 30 C-Atomen.

Als Beispiele geeigneter Hydroxylverbindungen seien genannt:

Methanol, Ethanol, 1-Propanol, 2-Propanol, 1-Butanol, 2-Butanol, iso-Butanol, tert.-Butanol, Amylalkohol, 2,2-Dimethyl-1-propanol, 3-Pentanol, 1-Pentanol, 2-Pentanol, 2-Methyl-1-butanol, 3-Methyl-2-butanol, 2-Methyl-2-butanol, 3-Methyl-1-butanol, 1-Hexanol, 2-Hexanol, 3-Hexanol, 2,3-Dimethyl-2-butanol, 2-Ethyl-1-butanol, 2-Methyl-3-pentanol, 3-Methyl-3-pentanol, 4-Methyl-1-pentanol, 1-Heptanol, 2-Heptanol, 3-Heptanol, 4-Heptanol, 2,2-Dimethyl-3-pentanol, 5-Methyl-2-hexanol, 2-Ethyl-1-hexanol, 1-Octanol, 3-Octanol, 2-Octanol, 2-Methyl-4-heptanol, 1-Nonanol, 2-Nonanol, 5-Nonanol, iso-Nonanol, 1-Decanol, 5-Decanol, iso-Decanole, 1-Undecanol, 3-Undecanol, 6-Undecanol, 1-Dodecanol, 2-Dodecanol, Tridecanol, Tetradecylalkohol, 1-Pentadecanol, Cetylalkohol, Stearylalkohol, 1-Nonadecanol, 2-Nonadecanol, 1-Eicosanol, 1-Docosanol, Methylglykol, Ethylglykol, Diethylenglykolmonobutylether, Diethylenglykolmonoethylether, Diethylenglykolmonomethylether, Diacetonalkohol, Allylalkohol, 2-Methyl-2-propen-1-ol, 2-Methyl-3-buten-2-ol, 2-Hexenol, 10-Undecen-1-ol, 4-Methyl-1,6-heptadien-4-ol, Cyclohexanol, Cyclopentanol, 2-Methylcyclohexanol, 3,4-Dimethylcyclohexanol, Cycloheptanol, Propargylalkohol, 2-Methyl-3-butin-2-ol, 3-Methyl-1-pentin-3-ol, Farnesol, Geraniol, (-)-Borneol, Linalool, Furfurylalkohol, 2-Phenoxyethanol, 1-Phenylethanol, 2-Phenylethanol, 1-Phenyl-1-propanol, Triphenylmethanol, 2-Phenyl-1-propanol, 3-Phenyl-1-propanol,

4-Hydroxybiphenyl, 1,1-Diphenylethanol, Phenol, 3-Ethylphenol, 4-Ethylphenol, Dimethylphenole, 2,6-Di-isopropylphenol, 2,6-Di-tert.-butyl-4-methylphenol, Di-tert.-butylphenole, 2-tert.-Butyl-4-methoxyphenol, 2-tert-Butyl-4-methylphenol, Butylphenole, Trimethylphenole, 2,6-Dimethoxyphenol, 3,5-Dimethoxyphenol, Anisalkohol, Benzhydrol, Benzoin, Benzylalkohol, Guajakol, 2-Benzylphenol, 4-Benzylphenol, Thymol, 2-Methoxybenzylalkohol, 2-Methylbenzylalkohol, 3-Methylbenzylalkohol, 4-tert.-Butylbenzylalkohol, Zimtalkohol, o-Kresol, m-Kresol, p-Kresol, 1-Naphthol, 2-Naphthol, Hydrochinonmonobenzylether, Hydrochinonmonomethylether, Resorcinmonomethylether, N,N-Dimethylethanolamin, Tributylphenole, Hexylphenole, Nonylphenole, Dodecylphenole, Hexadecylphenole, Phenylbenzylphenol, Phenylethylphenole, Toluylethylphenole, Dioctylphenole, Dinonylphenole, Di- und Tristyrylphenole, Mono-, Di- und Tristyrylnaphthole, Alkohole, wie sie aus natürlichen Fettsäuren herstellbar sind, wie z.B. Laurylalkohol, Cocosfettalkohol, Talgfettalkohol und Oleylalkohol, sowie Alkohole aus der Oxosynthese.

Geeignete sekundäre Amine sind Diallylamin, Di-n-butylamin, Dicyclohexylamin, Didecylamin, Dioctylamin, Dimethylamin, Diethylamin, Dipropylamin, Dipentylamin, Diphenylamin, N-Methylanilin, N-Ethyl-1-naphthylamin, Dibenzylamin und sekundäre Amine aus Naturprodukten - wie Distearylamin, Dicocosfettamin und Ditalgfettamin.

Besonders bevorzugt sind Alkylpolyglykolether folgender Struktur:

$$R^{20}-O-(-R^{15}-O)_e-H \qquad (XI)$$

worin

$R^{20}$ für einen Alkyl-, Phenyl-, Naphthyl-, Alkylphenyl- oder Alkylnaphthylrest mit 1 bis 30 C-Atomen und e für eine Zahl von 5 bis 80 steht.

Die Oxalkylierung der monofunktionellen Starter erfolgt in an sich bekannter Weise.

3.2. Additionsprodukte von Lactonen an monofunktionelle Starter wie Alkohole, Phenolderivate, Mercaptane und Amine.

Bevorzugte Verbindungen werden durch Addition von Propiolacton, Pivalolacton und insbesondere ε-Caprolacton an monofunktionelle Alkohole, Mercaptane und Alkylamine mit einem Siedepunkt von über 150°C erhalten.
Geeignete Alkohole und Phenolderivate sind bereits unter 3.1 aufgeführt. Geeignete Mercaptane sind Allylmercaptan, 1- und 2-Butanthiol, iso-Butylmercaptan, 1-Decanthiol, 1-Dodecanthiol, Heptylmercaptan, Hexanthiol, 1-Octadecanthiol, 1-Octanthiol, 1-Tetradecanthiol, Thiophenol, Benzylmercaptan und p-Thiokresol.

Geeignete Amine sind 2-Aminooctan, Cyclohexylamin, Decylamin, Dodecylamin, Heptylamin, Hexylamin, Nonylamin, iso-Nonylamin, Octadecylamin, Octylamin, Octadecenylamin, Anilin, Benzylamin, 1-Naphthylamin sowie primäre Amine aus Naturprodukten wie Cocosfettamin, Oleylamin, Stearylamin und Talgfettamin mit statistischen Kettenverteilungen.

Die Polyaddition erfolgt in an sich bekannter Weise.

Werden die Polyester in geschlossenen Druckgefäßen hergestellt, können auch Alkohole, Mercaptane und Amine mit niedrigen Siedepunkten eingesetzt werden.

Bevorzugte Additionsprodukte entsprechen folgender Struktur:

$$R^{20}-R^{5}-(-CO-CH_2-CH_2-CH_2-CH_2-CH_2-O-)_f-H \qquad (XII)$$

worin

$R^{20}$ und
$R^5$ die bereits beschriebene Bedeutung haben und
f für eine Zahl von 4 bis 30 steht.

3.3. Kondensationsprodukte von Hydroxycarbonsäuren in Gegenwart entsprechender Mengen eines monofunktionellen Alkohols oder Amins.

Bevorzugt sind Kondensationsprodukte aus einem primären Alkohol mit 6 bis 30 C-Atomen und Hydroxycarbonsäuren mit 3 bis 20 C-Atomen wie z.B. Hydroxypropionsäuren, 2-Hydroxy-isobuttersäure, Mandelsäure, DL-Tropasäure und insbesondere Hydroxyhexadecansäure, 12-Hydroxystearinsäure, Rizinolsäure und ε-Hydroxycapronsäure. Als primäre Alkohole seien genannt 1-, 2- und 3-Hexanol, 1-, 2-, 3-und 4-Heptanol, 1-, 2- und 3-Octanol, 1-, 2- und 5-Nonanol, 1- und 5-Decanol, iso-Decanol, 1-, 3- und 6-Undecanol, 1- und 2-Dodecanol, iso-Tridecanol, Tetradecylalkohol, Octadecanol, Cetylalkohol, 1-Eicosanol, 1-Docosanol und Alkohole, wie sie aus Naturprodukten gewonnen werden können, wie Cocosfettalkohol, Stearylalkohol, Talgfettalkohol und Oleylalkohol. Geeignete primäre Amine sind Hexylamin, Heptylamin, Octylamin, Nonylamin, Decylamin, Dodecylamin, Tetradecylamin, Hexadecylamin, Octadecylamin, Octadecenylamin sowie Amine aus Naturprodukten wie Cocosfettamin, Stearylamin, Oleylamin und Talgfettamin.

Bevorzugte Kondensationsprodukte entsprechen der allgemeinen Formel

$$R^{22}-R^5-(-CO-R^{21}-O-)_f-H \qquad (XIII)$$

worin

$R^{22}$ für Alkyl- oder Alkenyl mit 6 bis 20 C-Atomen,

$R^5$ für -O- oder -NH-,

$R^{21}$ für den Alkylenrest der Hydroxystearinsäure, Ricinolsäure oder insbesondere der ε-Hydroxycapronsäure steht und

f für eine Zahl von 4 bis 30 steht.

Die Kondensationsreaktion erfolgt in bekannter Weise in Substanz oder Lösung.

3.4. Kondensationsprodukte aus Diolen und Dicarbonsäuren in Gegenwart von monofunktionellen Alkoholen.

Bevorzugt sind Kondensationsprodukte in Gegenwart von primären Alkoholen mit 6 bis 30 C-Atomen mit Dicarbonsäuren mit 2 bis 40 C-Atomen wie z.B. Adipinsäure, Bernsteinsäure, Malonsäure, Oxalsäure, Korksäure, Azelainsäure, Sebacinsäure, Phthalsäure, Isophthalsäure, Phthalsäureanhydrid, Tetrahydrophthalsäure, Tetrahydrophthalsäureanhydrid, Hexahydrophthalsäureanhydrid, Endomethylentetrahydrophthalsäureanhydrid, Tetrachlorphthalsäureanhydrid, Glutarsäure, Glutarsäureanhydrid, Maleinsäure, Maleinsäureanhydrid, Fumarsäure, dimerisierte Fettsäuren sowie Terephthalsäure und ihre Ester, und Diolen wie z.B. 1,2-Ethandiol, 1,2- und 1,3-Propandiol, 1,2-, 2,3- und 1,4-Butandiol, 1,6-Hexandiol, 1,8-Octandiol, 2-Methyl-1,3-propandiol, 2,2-Dimethyl-1,3-propandiol, 1,4-Bis-hydroxymethylcyclohexan sowie insbesondere Diethylenglykol, Triethylenglykol, Tetraethylenglykol und höhere Polyethylenglykole, Dipropylenglykol und höhere Propylenglykole und Dibutylenglykol und höhere Polybutylenglykole. Die Dicarbonsäuren und Diole können für sich alleine oder aber in beliebiger Mischung untereinander zur Reaktion gebracht werden.

Die Kondensation erfolgt ebenfalls in bekannter Weise, wobei die Bildung von Polyestermolekülen, die an beiden Enden mit Monoalkohol verestert sind, zu minimieren ist.

3.5. Monofunktionelle Polyether-Polyester-Copolymere durch Kombination der Varianten 3.1. bis 3.4..

Außer den unter 3.4. beschriebenen Copolymeren, bei welchen als Diolkomponente u.a. Di-, Tri- oder Polyglykole verwendet werden, gibt es weitere bevorzugte Möglichkeiten zur Herstellung von Polyether-Polyester-Copolymeren, insbesondere von Blockcopolymeren und zwar wenn die Additionsprodukte aus 3.1. als Starter zur Herstellung der Additionsprodukte nach 3.2. bzw. der Kondensationsprodukte nach 3.3. oder umgekehrt die Reaktionsprodukte aus 3.2. und 3.3. als Starter zur Herstellung der Additionsprodukte nach 3.1. eingesetzt werden. Besonders hervorzuheben sind Additionsprodukte von Propiolacton, Pivalolacton und insbesondere ε-Caprolacton an Alkyl-, Aryl- und Aralkylpolyglykolether sowie die Additionsprodutke von Alkylenoxiden, insbesondere Ethylen- und Propylenoxid, an Alkylpolycaprolactone.

Besonders bevorzugt sind die unter 3.1. und 3.2. beschriebenen Verbindungen.

Bevorzugte Additionsverbindungen der allgemeinen Formel HY haben ein Molekulargewicht von 400 bis 10 000, insbesondere 600 bis 4 000.

4. Erfindungsgemäße Additionsverbindungen enthalten einen zweiwertigen Rest eines Polymeren HZH der Formel XIV

0104349

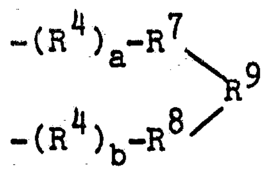

(XIV)

worin $R^4$, $R^7$, $R^8$, $R^9$, a und b die bereits definierte Bedeutung haben.

Zur Herstellung bevorzugter Verbindungen obiger Formel eignen sich die bereits unter 3.1. bis 3.5. beschriebenen Verfahren, jedoch mit dem Unterschied, daß als Starter bifunktionelle Verbindungen eingesetzt werden. Besonders zu erwähnen sind:

4.1. Additionsprodukte von Alkylenoxiden an Startkomponenten mit 2 reaktionsfähigen Wasserstoffatomen wie Wasser, zweiwertige Alkohole, sekundäre Diamine und aromatische Dihydroxyverbindungen.

Als Beispiele für geeignete Diole sind zu erwähnen:

1,2-Ethandiol, 1,2- und 1,3-Propandiol, 1,2-, 1,3-, 2,3- und 1,4-Butandiol, Pentandiole, Hexandiole, Octandiole, Decandiole, Di- und Triethylenglykol, Di- und Tripropylenglykole, Cyclohexandiole, 1,4-Bis-(hydroxymethyl)-cyclohexan, Hydroxybenzylalkohole, 2-Buten-1,4-diol, 2-Butin-1,4-diol, Hydrochinon, Brenzkatechin, Resorcin, Naphthalindiole, 2,2-Dimethyl-1,3-propandiol und 4,4'-Dihydroxy-diphenylmethan.

Die Oxalkylierung erfolgt wie unter 3.1 beschrieben.

4.2. Additionsprodukte von Lactonen an bifunktionelle Starter wie bifunktionelle Alkohole, Hydroxyaromaten, Mercaptane und Amine.

Geeignete Diole sind bereits unter 4.1 beschrieben. Als Dithiole kommen in Betracht: 1,2-Ethandithiol, 1,6-Hexandithiol, 1,5-Pentandithiol und 1,3-Propandithiol.

Als Diamine kommen in Frage:

1,2-Diaminoethan, 1,2-Diaminopropan, 1,4-Diaminobutan, Hexamethylendiamin, Dodecamethylendiamin, 1,2-, 1,3- und 1,4-Phenylendiamin.

Für die Polyadditionsreaktion gilt das bereits unter 3.2. Beschriebene.

4.3. Kondensationsprodukte aus Hydroxycarbonsäuren in Gegenwart entsprechender Mengen eines bifunktionellen Alkohols oder Amins.

Bevorzugte Kondensationsprodukte werden aus den unter 3.3. beschriebenen Hydroxycarbonsäuren in Gegenwart von entsprechenden Mengen Alkandiolen erhalten. Geeignete Diole sind unter 4.1. beschrieben.

4.4. Kondensationsprodukte aus Diolen und Dicarbonsäuren mit einem entsprechenden Überschuß an Diol.

Bevorzugt sind Kondensationsprodukte aus den unter 3.4. aufgeführten Dicarbonsäuren und Diolen.

Die Kondensationsreaktion erfolgt in der unter 3.4. beschriebenen Weise, wobei in diesem Fall ein Polyester mit möglichst niedriger Säurezahl anzustreben ist.

4.5. Bifunktionelle Polyether-Polyester-Copolymere durch Kombination der Varianten 4.1. bis 4.4..

Außer den nach Variante 4.4. herstellbaren Copolymeren, wenn als Diolkomponente u.a. Di-, Tri- oder Polyglykole eingesetzt werden, gibt es weitere bevorzugte Möglichkeiten zur Herstellung von Polyether-Polyester-Copolymeren, insbesondere von Blockcopolymeren, und zwar wenn die Additionsprodukte nach 4.2. bzw. Kondensationsprodukte nach 4.3. als Starter zur Herstellung der Additionsprodukte nach 4.1. oder umgekehrt, wenn die Additionsprodukte aus 4.1. als Starter zur Herstellung der Additionsprodukte nach 4.2. bzw. der Kondensationsprodukte nach 4.3. eingesetzt werden.

4.6. Additionsprodukte von Alkylenoxiden an primäre Alkyl- und Alkenylamine mit 6 bis 20 C-Atomen.

Bevorzugt sind Additionsprodukte mit Oberflächenaktivität, wie sie durch Addition von Ethylen- und/oder Propylenoxid an Fettamine erhalten werden. Zu erwähnen sind beispielsweise folgende Amine, an die 2 bis 100 Mol Ethylen- und/oder Propylenoxid addiert werden: Hexylamin, Octylamin, Decylamin, Dodecylamin, Tetradecylamin, Hexadecylamin, Octadecylamin, Octadecenylamin, Eicosylamin, Docosylamin sowie primäre Amine aus Naturprodukten wie Cocosfettamin, Oleylamin, Talgfettamin und Stearylamin.

4.7. Additionsprodukte von Alkylenoxiden an Alkindiole mit 6 bis 20 C-Atomen.

Bevorzugt sind Additionsprodukte mit Oberflächenaktivität, wie sie durch Addition von Ethylen- und/oder Propylenoxid an Alkindiole wie beispielsweise 2,4,7,9-Tetramethyl-5-decin-4,7-diol, 3,6-Dimethyl-4-octin-3,6-diol, 2,5-Dimethyl-3-hexin-2,5-diol und 3-Hexin-2,5-diol entstehen.

4.8. Oberflächenaktive Additionsprodukte der Formel XV

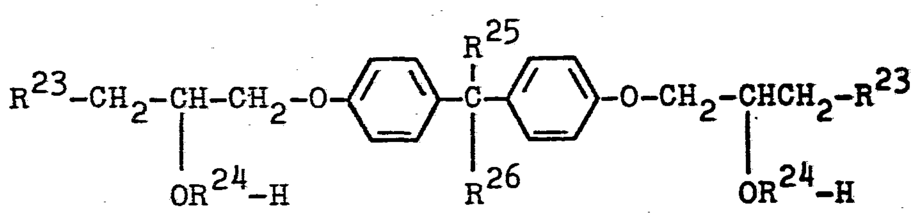

(XV)

wobei $R^{23}$ eine Gruppe der Formeln

$[R^{27}-R^{28}_h-(O-CHR^{29}-CHR^{30}-)_i]_2N-$ ,

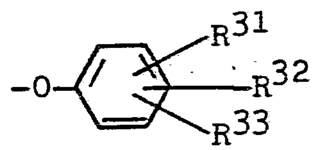

oder

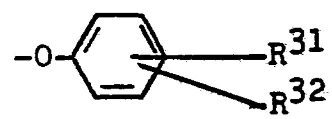

,

worin $R^{31}$, $R^{32}$ und $R^{33}$ Wasserstoff, $C_1$-$C_{18}$-Alkylreste, Chlor oder Brom sind,
$R^{25}$ und $R^{26}$ Wasserstoff oder $C_1$-$C_4$-Alkyl,
$R^{24}$ Polyalkylenglykolreste mit etwa 8 bis etwa 200 Alkylenglykoleinheiten, $R^{27}$ ein gesättigter oder ein ein- oder mehrfach ethylenisch ungesättigter aliphatischer Rest mit 6 bis 30 Kohlenstoffatomen ist,

$R^{28}$ Phenylen oder Naphthylen ist,
h Null oder 1 ist,
$R^{29}$ und $R^{30}$ Wasserstoff oder Methyl, und
i eine Zahl von 0 bis 25 ist.

Bevorzugte erfindungsgemäß zu verwendende zweiwertige Polymere sind unter 4.1., 4.2. und 4.6. beschrieben und haben ein Molekulargewicht von 400 bis 10 000, insbesondere 600 bis 4 000.

5. Bei der Herstellung der erfindungsgemäßen Additionsverbindungen ist zu beachten, daß an die polyfunktionellen Isocyanate der Formel VIII drei Komponenten, und zwar Aminverbindungen (HX) und polymere, mono- und bifunktionelle Verbindungen (HY bzw. HZH) addiert werden, die sich im allgemeinen in der Reaktivität, im Molekulargewicht, im Löseverhalten und in ihren Auswirkungen auf den Reaktionsablauf deutlich voneinander unterscheiden. Des weiteren ist zu beachten, daß diejenigen Additionsverbindungen bevorzugt sind, bei welchen alle 4 Ausgangsverbindungen in einem Molekül vereint werden.

Zur Herstellung bevorzugter Additionsverbindungen gibt es folgende Möglichkeiten:

5.1. Das polyfunktionelle Isocyanat wird in einem Reaktionsschritt mit einer Mischung der Komponenten HX, HY und HZH zur Reaktion gebracht. Dieses einfache Herstellungsverfahren ist nur dann sinnvoll, wenn HX, HY und HZH in ihrer Reaktivität gegenüber NCO-Gruppen vergleichbar und die Komponenten weitgehend miteinander verträglich sind. Dabei kann

5.1.1. das polyfunktionelle Isocyanat vorgelegt und die Mischung der Komponenten HX, HY und HZH zuzugeben werden oder vorzugsweise

5.1.2. die Mischung HX, HY und HZH vorgelegt und das polyfunktionelle Isocyanat zugegeben werden.

5.2. Das polyfunktionelle Isocyanat wird mit den Komponenten HX, HY und HZH in drei Reaktionsschritten nacheinander umgesetzt. Das kann in beliebiger Reihenfolge geschehen. Wird das Amin der Formel HX zuerst mit dem polyfunktionellen Isocyanat zur Reaktion gebracht, so

führt es in vielen Fällen zu schwerlöslichen Reaktionsprodukten, deren Weiterverarbeitung schwierig ist. Außerdem beschleunigen zahlreiche Amine nicht nur die Urethanbildung, sondern katalysieren auch Nebenreaktionen der Isocyanate wie z.B. deren Polymerisation zu Uretdionen und Isocyanuraten. Deshalb werden vorzugsweise

5.2.1. das polyfunktionelle Isocyanat vorgelegt, und zuerst mit dem monofunktionellen Polymeren HY, dann mit dem bifunktionellen Polymeren HZH und zum Schluß mit der Aminverbindung HX zur Reaktion gebracht. Es kann jedoch auch

5.2.2. das polyfunktionelle Isocyanat vorgelegt, und zuerst mit dem bifunktionellen Polymeren HZH, dann mit dem monofunktionellen Polymeren HY und zum Schluß mit der Aminverbindung HX zur Reaktion gebracht werden.

5.2.3. Bei einem weiteren bevorzugten Herstellungsverfahren werden die beiden ersten Reaktionsschritte entsprechend 5.2.1. bzw. 5.2.2. durchgeführt. Beim 3. Reaktionsschritt wird das Amin vorgelegt und das Reaktionsprodukt aus polyfunktionellem Isocyanat, HY und HZH zugegeben. Dieses Verfahren bietet dann Vorteile, wenn die Aminkomponente mehr als eine reaktionsfähige Gruppe besitzt oder unerwünschte Nebenreaktionen der Isocyanatgruppen verursacht.

5.2.4. Eine weitere bevorzugte Herstellvariante beinhaltet im ersten Schritt die Reaktion des polyfunktionellen Isocyanats mit dem monofunktionellen Polymeren HY, im zweiten Schritt mit der Aminverbindung HX und zum Schluß mit dem bifunktionellen

Polymeren HZH. Besonders bevorzugt ist die Variante, bei welcher das bifunktionelle Polymere vorgelegt und das Reaktionsprodukt aus polyfunktionellem Isocyanat, HY und HX zugegeben wird. Bei diesem Verfahren können die stöchiometrischen Verhältnisse so gewählt werden, daß überwiegend Produkte der allgemeinen Formel (V) erhalten werden.

5.3. Das polyfunktionelle Isocyanat wird in 2 Reaktionsschritten mit den Komponenten HX, HY und HZH umgesetzt. Dabei sind folgende Herstellvarianten bevorzugt:

5.3.1. Das polyfunktionelle Isocyanat wird vorgelegt und im ersten Schritt mit dem monofunktionellen Polymeren HY und dem bifunktionellen Polymeren HZH umgesetzt. In der zweiten Stufe wird die Aminverbindung HX addiert.

5.3.2. Der erste Reaktionsschritt erfolgt analog 5.3.1. jedoch im 2. Reaktionschritt wird das Reaktionsprodukt aus HY, HZH und dem polyfunktionellen Isocyanat zur Aminverbindung HX zugegeben. Dieses Verfahren bietet die gleichen Vorteile wie 5.2.3.

5.3.3. Besonders bevorzugt ist die folgende Verfahrensweise, bei welcher im ersten Reaktionsschritt das polyfunktionelle Isocyanat vorgelegt und mit dem monofunktionellen Polymeren HY umgesetzt wird. Im 2. Schritt wird dieses Reaktionsprodukt zu einem Gemisch aus dem bifunktionellen Polymeren HZH und der Aminverbindung HX zugegeben. Bei diesem Verfahren können die stöchiometrischen Verhältnisse so gewählt werden, daß entweder überwiegend Verbindungen der Formel (V) oder der Formeln (VI) und (VII) erhalten werden.

5.4. Die Herstellung der erfindungsgemäßen Additionsprodukte kann in allen Lösemitteln erfolgen, die gegenüber den Reaktionspartnern inert sind oder deren Reaktivität gegenüber den Reaktionspartnern zu vernachlässigen ist, und in denen die Reaktanten und die Reaktionsprodukte zumindest teilweise löslich sind. Zu nennen sind beispielsweise Kohlenwasserstoffe, insbesondere aromatische Kohlenwasserstoffe wie Toluol, Xylol, Ethylbenzole und Tetrahydronaphthalin, chlorierte Kohlenwasserstoffe, insbesondere Methylenchlorid, Chloroform, Tetrachlorkohlenstoff, Trichlorethan, Trichlorethen und Chlorbenzole, Ketone wie Butanon-2, Methylisobutylketon, Cyclohexanon, Ether wie Diisopropylether, Dibutylether, Tetrahydrofuran, Dioxan und Anisol, Ester wie Methylacetat, Ethylacetat, Butylacetat, Butylbutyrat und Butyrolacton, Alkylglykolester wie Methylglykolacetat, Ethylglykolacetat, Butylglykolacetat, Ethyldiglykolacetat, Butyldiglykolacetat sowie die entsprechenden Propylenglykolderivate und Essigsäure-3-methoxy-n-butylester, Glykolether wie Ethylenglykol-, Diethylenglykol-, Triethylenglykol- und Polyalkylenglykoldimethylether, Säureamide, wie Dimethylformamid, Dimethylacetamid und N-Methylpyrrolidon-2, stickstoffhaltige Lösemittel wie Nitrobenzol, Nitromethan, Acetonitril und Pyridin und schwefelhaltige Lösemittel wie Dimethylsulfoxid. Die Lösemittel können allein sowie in Mischung miteinander eingesetzt werden. Zur Herstellung der erfindungsgemäßen Additionsprodukte werden vorzugsweise Lösemittel eingesetzt, die mit Wasser teilweise oder vollständig mischbar sind.

Die Reaktion zur Herstellung der erfindungsgemäßen Additionsprodukte wird bei einer Temperatur von 0° bis 120°C, vorzugsweise 20° bis 100°C durchgeführt.

Vorzugsweise werden die Reaktanten bei einer Temperatur von 20° bis 60°C in Kontakt gebracht und die Reaktion bei einer Temperatur von 60° bis 100°C zu Ende geführt. Dies gilt für Reaktionen mit einem, zwei oder drei Reaktionsschritten.

Die Lösemittel können je nach Siedepunkt und Anwendungsgebiet im Reaktionsgemisch verbleiben oder werden destillativ entfernt. Fällt das Reaktionsprodukt im gewählten Lösemittel aus, so kann es auch durch Filtration isoliert werden.

Die Reaktionsgeschwindigkeit des polyfunktionellen Isocyanats mit den Reaktanten HX, HY und HZH ist nicht nur von der Art der Reaktanten selbst und der Reaktionstemperatur, sondern auch von der Art des verwendeten Lösemittels und geeigneten Katalysatoren abhängig. Geeignete Katalysatoren sind beispielsweise Verbindungen von Natrium, Kalium, Magnesium, Barium, Aluminium, Blei, Wismut, Zinn, Zink, Titan, Eisen, Antimon, Uran, Cadmium, Kobalt, Quecksilber, Nickel, Vanadin, Cer, Mangan, Kupfer, ferner Amine wie Triethylamin, Diethylcyclohexylamin, Dimethylethanolamin, N-Methyl- und N-Ethylmorpholin, Triethylendiamin, N-Ethylethylenimin, Tetramethylguanidin, 1-Methyl-4-(dimethylaminoethyl)piperazin, N,N,N',N'-Tetramethyl-1,3-butylendiamin, Lauryldimethylamin, Tetrakis-(2-hydroxypropyl)ethylendiamin, N,N,N',N'-Tetramethylethylendiamin, Bis(2-hydroxypropyl)-2-methylpiperazin, 1,4-Diazabicyclo-[2,2,2]octan, 1,2,4-Trimethylpiperazin, Phosphine, Carbonsäuren, Pyrone und Lactame.

Besonders bevorzugt sind tert. Amine wie 1,4-Diazabicyclo[2,2,2]octan und Zinnverbindungen wie Dibutylzinndilaurat.

Bei bevorzugten erfindungsgemäßen Additionsprodukten wird 1 Äquivalent NCO-Gruppen des polyfunktionellen Isocyanats der Formel (VIII) mit 0,1 bis 0,8 Äquivalenten, insbesondere 0,1 bis 0,7 Äquivalenten OH- bzw. NH-Gruppen der Aminverbindungen der Formel HX, mit 0,1 bis 0,8 Äquivalenten, insbesondere 0,15 bis 0,5 Äquivalenten OH-Gruppen der Polymeren der Formel HY und 0,02 bis 0,5 Äquivalenten, insbesondere 0,05 bis 0,3 Äquivalenten OH-Gruppen der Polymeren der Formel HZH zur Reaktion gebracht.

Zur Herstellung der erfindungsgemäßen Additionsverbindungen entsprechend Formel (VI) und (VII) werden die polyfunktionellen Isocyanate genau im stöchiometrischen Verhältnis mit den Aminverbindungen der Formel HX, den hydroxylgruppenhaltigen Polymeren der Formeln HY und HZH umgesetzt.

Die Herstellung der erfindungsgemäßen Additionsverbindungen entsprechend Formel (V) erfolgt vorzugsweise nach den Verfahren 5.2.4. und insbesondere 5.3.3., wobei die stöchiometrischen Verhältnisse so gewählt werden, daß im wesentlichen nur eine OH-Gruppe des Polymeren HZH mit NCO-Gruppen reagiert.

Die stöchiometrischen Verhältnisse können auch so gewählt werden, daß das Polymere HZH teilweise mit einer OH-Gruppe und teilweise mit 2 OH-Gruppen reagieren kann, so daß eine Mischung der Additionsprodukte der Formeln (V) bis (VII) entsteht.

Werden Aminverbindungen HX mit mehr als einer reaktiven Gruppe pro Molekül eingesetzt, so können diese Verbindungen je nach Reaktionsführung und den stöchiometrischen Verhältnissen ein- oder mehrmals mit Isocyanatgruppen reagieren. Bevorzugt sind Aminverbindungen, die nur über eine Bindung mit den Polyisocyanatbausteinen verknüpft werden können.

Wird die Additionsreaktion in 2 oder 3 Schritten durchgeführt, so ist es sinnvoll, zusätzlich zu der NCO-Gehaltsbestimmung vor der Reaktion nach jedem Reaktionsschritt den NCO-Gehalt zu bestimmen. Das kann IR-spektrometrisch durch Auswertung der NCO-Bande oder analytisch durch Titration erfolgen. Die titrimetrische Bestimmung wird so durchgeführt, daß eine genau gewogene Probe mit Chlorbenzol verdünnt und mit einem Überschuß einer eingestellten Dibutylaminlösung in Chlorbenzol versetzt wird. Nach längstens 5 Minuten kann die überschüssige Aminlösung nach Zugabe von Methanol mit eingestellter alkoholischer Salzsäure gegen Bromphenolblau als Indikator zurücktitriert werden. Falls Nebenreaktionen ablaufen, die zu einem erhöhten Umsatz an NCO-Gruppen führen, ist bei den weiteren Reaktionsschritten eine Korrektur möglich.

Beobachtete Nebenreaktionen werden hauptsächlich durch eine Reihe von Aminderivaten und durch Alkalimetallsalze verursacht. Diese Alkalimetallsalze sind in den meisten polymeren Additionsprodukten auf Basis von Alkylenoxiden enthalten. Die Nebenreaktionen können bis zu einem gewissen Umfang erwünscht bzw. tolerierbar sein. Nehmen sie jedoch überhand, so führt es zu gelartigen, schwerlöslichen, hochmolekularen Additionsprodukten, die für die weitere Anwendung ungeeignet sind. Zur Vermeidung dieser Nebenreaktionen ist eine Reinigung der Polyalkylenoxide empfehlenswert.

Dies konnte durch geeignete Adsorbentien oder Ionenaustauscher geschehen oder beispielsweise dadurch, daß zu dem rohen Polyether bei höherer Temperatur unter Rühren Wasser und danach 85 Gew.-%ige wäßrige (sirupöse) Phosphorsäure hinzugefügt wurden. Die Reaktionsmischung wurde eine Stunde bei der Temperatur gerührt und mit einem handelsüblichen synthetischen Magnesiumsilikat versetzt. Nach einer weite-

0194349

ren Rührzeit von einer Stunde wurde ein Filterhilfsmittel auf Basis von Kieselgur hinzugefügt, bei der gleichen Temperatur durch einen Metallfilter unter Druck filtriert und das Wasser unter vermindertem Druck abdestilliert.

Besonders bevorzugt sind erfindungsgemäße Additionsprodukte , die in Wasser emulgierbar oder zumindest teilweise löslich sind, so daß sie in wäßriger Phase auf Feststoffe, insbesondere Pigmente, aufgebracht werden können und Feststoffe auch in wäßrigen Systemen dispergieren und stabilisieren. Durch das Aufbringen der Additionsprodukte und gebenenfalls weiteren, üblichen oberflächenaktiven Substanzen auf die Feststoffe, insbesondere Pigmente, lassen sich staubarme, leicht dispergierbare Mikrogranulate herstellen. Natürlich eignen sich die erfindungsgemäßen Additionsprodukte zur Dispergierung von Feststoffen, insbesondere Pigmenten, in organischen Medien.

Als anorganische Pigmente eignen sich z.B. Weiß- und Buntpigmente wie Titanoxide, Zinkoxide, Zinksulfide, Cadmiumsulfide oder -selenide, Eisenoxide, Chromoxide, Chromatpigmente, als Pigmente geeignete Mischoxide aus den Elementen Aluminium, Antimon, Chrom, Eisen, Kobalt, Kupfer, Nickel, Titan und Zink sowie Verschnittpigmente und insbesondere Ruße.

Als geeignete organische Pigmente sind beispielsweise zu nennen: Azopigmente, Azamethine, Azaporphine, Chinacridone, Flavanthron-, Anthanthron- und Pyranthronkörper, Derivate der Naphthalintetracarbonsäure, der Perylentetracarbonsäure, des Thioindigos, des Dioxazins und des Tetrachlorisoindolinons, verlackte Pigmente wie Mg-, Ca-, Sr-, Ba-, Al-, Mn-, Co- und Ni-Salze von säuregruppenhaltigen Farbstoffen sowie entsprechende Pigmentmischungen.

Es gibt mehrere Möglichkeiten, die erfindungsgemäßen Additionsverbindungen auf die Feststoffoberfläche aufzubringen. Dieser Vorgang kann während oder nach der Synthese von Pigmenten bei einem Finishprozeß oder bei ihrer Weiterverarbeitung im Anwendungsmedium erfolgen. Besonders bevorzugt ist das Aufbringen der Hilfsmittel in wäßrigen Suspensionen nach der Pigmentsynthese, da auf diese Weise die optimale Wirkung mit der niedrigsten Konzentration der erfindungsgemäßen Additionsverbindungen erzielt wird.

Pigmente können in der bei der Synthese anfallenden Form oder unter Verwendung weiterer üblicher Löse- und Hilfsmittel, insbesondere von Säuren und oberflächenaktiven Substanzen eingesetzt werden.

Die durch Dispergierung von Pigmenten in organischen Flüssigkeiten in Gegenwart der erfindungsgemäßen Additionsverbindungen erhaltenen Pigmentdispersionen eignen sich zum Anfärben von 2-Komponenten- und Einbrennlacken.

Die erfindungsgemäßen Additionsverbindungen besitzen eine gute Verträglichkeit mit den verschiedensten Bindemittelsystemen. Dispersionen, deren Pigmente durch die erfindungsgemäßen Additionsverbindungen stabilisiert sind, zeichnen sich durch gute rheologische Eigenschaften bei hohem Pigmentierungsgrad, hohe Flockungsbeständigkeit, hohe Farbstärke und hohen Glanz aus.

Damit die erfindungsgemäßen Additionsverbindungen ihre optimale Wirksamkeit entfalten, werden sie in einer Konzentration von 0,3 mg bis 100 mg, vorzugsweise 1 mg bis 10 mg, bezogen auf 1 $m^2$ Pigmentoberfläche nach BET, auf das Pigment aufgebracht.

Zur Eignungsprüfung werden die in den nachfolgenden Beispielen beschriebenen Additionsprodukte entweder auf Pig-

0194349

mente aufgebracht oder sie werden zur Dispergierung von Feststoffen, insbesondere Pigmenten in organischen Flüssigkeiten oder in Lacksystemen eingesetzt. Als Lacksysteme wurden aus der Vielzahl der bekannten Systeme ein Alkyd-Melaminharz-Lack (AM) auf Basis eines mittelöligen, nichttrocknenden Alkydharzes aus synthetischen Fettsäuren und Phthalsäureanhydrid und eines butanolveretherten Melaminharzes sowie ein Acrylharzeinbrennlack auf Basis einer nichtwäßrigen Dispersion (TSA-NAD) ausgewählt. An den mit diesen Lacken erstellten Einbrennlackierungen wurden die anwendungstechnischen Eigenschaften, insbesondere der Glanz, geprüft. Die Glanzmessung erfolgte unter einem Winkel von 20° nach DIN 67 530 (ASTM D 523) mit dem "multigloss"-Glanzmeßgerät der Firma Byk-Mallinckrodt. Außerdem konnte nach der Dispergierung im Dispergierlack die Viskosität des Systems mit einem Viskospatel beurteilt werden. In nahezu allen Fällen führte die Verwendung der erfindungsgemäßen Additionsverbindungen zu einer deutlichen Erniedrigung der Viskosität der pigmentierten Lacke.

In den folgenden Beispielen bedeuten Teile Gewichtsteile. Die Herstellung der erfindungsgemäßen Additionsprodukte erfolgte vorzugsweise in Lösemitteln, die frei waren von OH- und NH-gruppenhaltigen Verunreinigungen und unter dem Ausschluß von Luftfeuchtigkeit. Die Bestimmung des Molekulargewichts wurde osmometrisch in Dimethylsulfoxid durchgeführt.

<u>Beispiel 1</u>

In einem Rührgefäß wurden 7,5 Tle eines 4,4'-Diphenylmethandiisocyanat-Polymeren gemäß der idealisierten Struktur in Formel VIII (Viskosität bei 25°C 130 mPas) in 20 Tln Diglykoldimethylether gelöst, 0,03 Tle Dibutylzinndilaurat zugesetzt und auf 40°C erwärmt. In diese Lösung mit einem NCO-Gehalt von 8,6% wurden 3 Tle eines Polyethylenglykols (mittleres Molgewicht 600) in 20 Tln Diglykoldimethylether rasch zugetropft, der Ansatz 90

Minuten bei 70°C gerührt und ein NCO-Gehalt von 4,0% ermittelt. Nach Abkühlen des Gefäßinhalts auf 40°C wurden 20 Tle eines Polyglykolmonomethylethers (mittleres Molgewicht 1000, Ethylen-/Propylenoxidverhältnis 4:1) in 10 Tln Diglykoldimethylether rasch zugegeben. Man rührte 1 Stunde bei 70°C und fand einen NCO-Gehalt von 1,5%. Anschließend wurden innerhalb von 10 Minuten bei 40°C 2,7 Tle N,N-Dimethylethanolamin in 10 Tln Diglykoldimethylether zugetropft. Man rührte 2 Stunden bei 70°C und erhielt ein leicht bräunlich gefärbtes, klares, niedrigviskoses Produkt mit einem Feststoffgehalt von 35,6%, das im IR-Spektrum keine NCO-Gruppen mehr aufwies. Mittleres Molgewicht des Feststoffes: 3700.

Anwendungsbeispiel 1:

In einem Rührgefäß wurden 16 Tle der Lösung des Additionsprodukts aus Beispiel 1 mit 0,4 Tln Essigsäure und 280 Tln $H_2O$ verdünnt. In diese klare Lösung wurden unter Rühren mit einem Dissolver portionsweise 376 Tle eines Preßkuchens der deckenden γ-Modifikation von C.I. Pigment Violet 19 (Feststoffgehalt 25%; Oberfläche nach BET von 34 $m^2/g$) eingetragen, 20 Minuten gerührt und die erhaltene Pigmentsuspension anschließend getrocknet. Wurde dieses so erhaltene Pigment in einer Konzentration von 7% in dem beschriebenen AM-Lack dispergiert, so wurden bei damit erstellten hochglänzenden Lackierungen Glanzwerte von 90 gemessen.

Wurden die 16 Tle der Lösung des Additionsproduktes aus Beispiel 1 durch eine 35,6%ige Lösung des Polyesters aus Beispiel 1 und 2 der US-Patentschrift 3 970 687 in Diglykoldimethylether ersetzt, so wurden sehr stippige AM-Lackierungen erhalten, an denen keine einheitlichen Glanzwerte gemessen werden konnten. Wurden die 16 Tle des Additionsproduktes aus Beispiel 1 durch 16 Tle $H_2O$ ersetzt, so wurde ein Lack mit wesentlich höherer Viskosität erhalten. An entsprechend pigmentierten AM-Lackierungen, die ein mattes Aussehen mit milchigem Schleier zeigten, wurden Glanzwerte von 28 gemessen.

## Beispiel 2

In einem Rührgefäß wurden 7,5 Tle eines 4,4'-Diphenylmethandiisocyanat-Polymeren gemäß der idealisierten Struktur in Formel VIII (Viskosität bei 25°C 130 mPas), 30 Tle Xylol und 0,03 Tle 1,4-Diazabicyclo[2,2,2]octan vorgelegt und auf 60°C erwärmt. In diese Lösung mit einem NCO-Gehalt von 6,2% wurden innerhalb von 20 Minuten 36 Tle eines Polyesters aus 1 Mol Decanol und 25 Mol ε-Caprolacton, gelöst in 40 Tln Methylglykolacetat, zugetropft, das Gemisch 1 Stunde bei 90°C gerührt und ein NCO-Gehalt von 1,7% ermittelt. Der Ansatz wurde auf 60°C abgekühlt und 2,7 Tle eines Addukts von 10 Mol Ethylenoxid an 1 Mol 2,4,7,9-Tetramethyl-5-decin-4,7-diol in 10 Tln Methylglykolacetat rasch zugegeben. Man rührte 1 Stunde bei 90°C und fand einen NCO-Gehalt von 1,2%. In einem zweiten Reaktionsgefäß wurden 13,4 Tle 2-[2-(8-Heptadecen-1-yl)-4,5-dihydro-1-imidazolyl]-ethanol und 10 Tle Methylglykolacetat vorgelegt und auf 60°C erwärmt. Während 30 Minuten ließ man das Umsetzungsprodukt der ersten und zweiten Reaktionsstufe zutropfen und rührte den Ansatz noch 2 Stunden bei 90°C. Man erhielt ein isocyanatgruppenfreies, gelblich gefärbtes, klares, niedrigviskoses Produkt mit einem Feststoffgehalt von 39,8%. Mittleres Molgewicht des Feststoffes: 4200.

## Anwendungsbeispiel 2:

In dem beschriebenen AM-Lack wurden 7% C.I. Pigment Violet 19 der deckenden γ-Modifikation (Oberfläche nach BET 34 $m^2/g$) unter Zusatz der Lösung des Additionsprodukts aus Beispiel 2 (0,7% 100%iges Additionsprodukt) dispergiert und die damit erstellten Lackierungen eingebrannt. An den hochglänzenden Lackierungen wurden Glanzwerte von 88 gemessen. Wurden die 0,7% des Additionsproduktes aus Beispiel 2 durch Lösemittel ersetzt, so wurden Lacke mit wesentlich höherer Viskosität und matte Lackierungen mit einem milchigen Schleier erhalten, deren Glanzwerte bei 27 lagen.

Wurden die 0,7% des Additionsproduktes aus Beispiel 2 durch 0,7% des Polyesters aus Beispiel 1 und 2 der US-Patentschrift 3 970 687 ersetzt, so wurden matte Lackierungen mit einem Glanzwert von 42 erhalten.

Beispiel 3

In einem Rührgefäß wurden 23,3 Tle eines Addukts von 1 Mol Nonylphenol und 30 Mol Ethylenoxid, 11 Tle eines Blockcopolymerisats bestehend aus 80 Gew.-% Propylen- und 20 Gew.-% Ethylenoxid (mittleres Molgewicht 2200), 4,5 Tle N-Methyl-2-hydroxymethylpiperidin, 0,04 Tle Dibutylzinndilaurat sowie 50 Tle Methylglykolacetat vorgelegt und auf 50°C erwärmt. Innerhalb von 15 Minuten ließ man 7,5 Tle eines 4,4'-Diphenylmethandiisocyanat-Polymeren gemäß der idealisierten Struktur in Formel VIII (Viskosität bei 25°C 130 mPas), gelöst in 30 Tln N-Methylpyrrolidon, zutropfen und rührte den Ansatz noch 2 Stunden bei 80°C. Man erhielt eine leicht bräunlich gefärbte, klare, niedrigviskose Lösung des Reaktionsprodukts mit einem Feststoffgehalt von 36,7%. Im IR-Spektrum konnten keine NCO-Gruppen mehr nachgewiesen werden. Mittleres Molgewicht des Feststoffes: 4100.

Anwendungsbeispiel 3:

In einem Rührgefäß wurden 800 Tle eines Preßkuchens der deckenden γ-Modifikation von C.I. Pigment Violet 19 (Feststoffgehalt 25%; Oberfläche nach BET 34 $m^2/g$), in eine Mischung aus 32 Tln des in Beispiel 3 beschriebenen Additionsprodukts, 4 Tln eines Addukts von Nonylphenol und 8 Mol Ethylenoxid und 80 Tln Wasser eingetragen und 20 Minuten mit einem Dissolver gerührt. Die so erhaltene fließfähige Pigmentsuspension wurde anschließend sprühgetrocknet. Man erhielt ein staubarmes Mikrogranulat.

Wurde mit dem erhaltenen Mikrogranulat ein Alkyd-/Melaminharzlack gemäß Anwendungsbeispiel 2 ohne weiteren Zusatz des Additionsprodukts aus Beispiel 3 hergestellt, erhielt man hochglänzende Lackierungen mit Glanzwerten von 86.

Beispiel 4

In einem Rührgefäß wurden 7,5 Tle eines 4,4'-Diphenylmethandiisocyanat-Polymeren gemäß der idealisierten Struktur in Formel VIII (Viskosität bei 25°C 250 mPas) und 0,03 Tle Dibutylzinndilaurat in 20 Tln Methylglykolacetat gelöst und auf 50°C erwärmt. In diese Lösung wurden innerhalb von 10 Minuten 19,1 Tle eines Polyesters aus 1 Mol Decanol und 7 Mol ε-Caprolacton in 30 Tln Methylglykolacetat zugetropft und der Ansatz noch 2 Stunden bei 80°C gerührt. Der NCO-Gehalt sank dabei von 3,3% zu Beginn der Reaktion auf 2,25%. In einem zweiten Reaktionsgefäß wurden 8 Tle eines Polyethylenglykols (mittleres Molgewicht 1000) und 3,75 Tle N-(3-Aminopropyl)-imidazol in 40 Tln N-Methylpyrrolidon vorgelegt und auf 50°C erwärmt. Innerhalb von 30 Minuten ließ man zu dieser Lösung das klare, leicht gelblich gefärbte, niedrigviskose Reaktionsprodukt der ersten Reaktionsstufe zulaufen, rührte den Ansatz noch 2 Stunden bei 80°C und erhielt ein bei Raumtemperatur gelblich gefärbtes, klares, niedrigviskoses Endprodukt mit einem Feststoffgehalt von 30%, bei dem keine NCO-Gruppen mehr nachzuweisen waren. Mittleres Molgewicht des Feststoffes: 3800.

Anwendungsbeispiel 4:

37 Tle C.I. Pigment Violet 19, 16 Tle der Lösung des Additionsprodukts aus Beispiel 4 und 47 Tle Methylglykolacetat wurden in einer Perlmühle 1 Stunde mit 1 mm Siliquarzitperlen dispergiert. Dabei wurde eine stabile

Pigmentdispersion erhalten, die sich insbesondere zum Pigmentieren der beschriebenen Lacksysteme eignet. An damit pigmentierten Lackierungen wurden Glanzwerte von 87 gemessen. Wurde die Pigmentdispersion getrocknet, so erhielt man ein leicht dispergierbares, staubarmes Pigment.

Beispiel 5

In einem Rührgefäß wurden 7,5 Tle eines 4,4'-Diphenylmethandiisocyanat-Polymeren gemäß der idealisierten Struktur in Formel VIII (Viskosität bei 25°C 300 mPas) und 0,03 Tle Dibutylzinndilaurat in 20 Tln Methylglykolacetat gelöst und auf 50°C erwärmt. In diese Lösung wurden innerhalb von 15 Minuten 20 Tle eines Polyglykolmonomethylethers (mittleres Molgewicht 1000, Ethylen-/Propylenoxidverhältnis 4:1) in 30 Tln Methylglykolacetat zugetropft und der Ansatz noch 2 Stunden bei 80°C gerührt. Der NCO-Gehalt sank dabei von 3,2% zu Beginn der Reaktion auf 2,1%. In einem zweiten Reaktionsgefäß wurden 10 Teile eines Addukts aus 1 Mol Ethylenglykol und 17 Mol ε-Caprolacton und 3,75 Tle N-(3-Aminopropyl)-imidazol in 30 Tln Methylglykolacetat vorgelegt und auf 50°C erwärmt. Innerhalb von 30 Minuten ließ man zu dieser Lösung das klare, gelb gefärbte, niedrigviskose Reaktionsprodukt der ersten Reaktionsstufe zulaufen, rührte den Ansatz noch 2 Stunden bei 80°C und erhielt ein bei Raumtemperatur gelblich gefärbtes, mittelviskoses, trübes Endprodukt mit einem Feststoffgehalt von 34 %, bei dem keine NCO-Gruppen mehr nachzuweisen waren. Mittleres Molgewicht des Feststoffes: 4400.

Wurde dieses Reaktionsprodukt entsprechend Anwendungsbeispiel 4 eingesetzt, erhielt man eine stabile Pigmentdispersion. Bei damit pigmentierten AM-Lackschichten konnten Glanzwerte von 85 gemessen werden.

Setzte man an Stelle des Addukts aus 1 Mol Ethylenglykol und 17 Mol ε-Caprolacton ein Polyethylenglykol (mittleres Molgewicht 1000) und/oder an Stelle von N-(3-Aminopropyl)-imidazol 4-(3-Aminopropyl)-morpholin ein, wurden AM-Lackfilme mit vergleichbaren Glanzwerten erhalten.

Anwendungsbeispiel 5

30 Tle der Additionsverbindung aus Beispiel 4 (30%ige Lösung in N-Methylpyrrolidon/Methylglykolacetat) wurden in einem Rührgefäß vorgelegt. In diese Lösung wurden 70 Tle eines feingemahlenen Dolomits eingerührt. Die entstandene Feststoffdispersion wurde mit Hilfe von Siliquarzitperlen von 1 mm Durchmesser in einer Perlmühle dispergiert. Man erhielt eine sehr gut fließfähige, homogene, lager- und flockungsstabile Feststoffdispersion mit einem Feststoffgehalt von 70%. Ersetzte man die verwendete Additionsverbindung durch N-Methylpyrrolidon/Methylglykolacetat 1:1,25, erhielt man eine pastöse Dispersion mit einem Feststoffgehalt von maximal 60%, bei der sich schon nach kurzer Zeit starkes Serum bildete.

Beispiel 6

In einem Rührgefäß wurden 7,5 Tle eines 4,4'-Diphenylmethandiisocyanat-Polymeren gemäß der idealisierten Struktur in Formel VIII (Viskosität bei 25°C 250 mPas) in 20 Tln Diglykoldimethylether gelöst, 0,03 Tle Dibutylzinndilaurat zugegeben und auf 50°C erwärmt. Innerhalb von 15 Minuten wurden 17,6 Tle eines Addukts von 1 Mol Nonylphenol und 15 Mol Ethylenoxid in 30 Tln Diglykoldimethylether zugetropft und das Reaktionsgemisch 2 Stunden bei 80°C gerührt. Dabei fiel der NCO-Gehalt von 3,1% zu Beginn der Reaktion auf 2,1%. Der Ansatz wurde auf 50°C abgekühlt und 20 Tle eines oxethylierten Reaktionsprodukts

aus dem Bisglycidylether von 2,2-Bis(4-hydroxyphenyl)-propan und eines Etheramins der allgemeinen Formel $[R^a(OCH_2-CH_2)_5]_2NH$, worin $R^a$ für den Alkylrest des Cocosfettalkohols steht (mittleres Molgewicht des Reaktionsprodukts 4000), gelöst in 20 Tln Diglykoldimethylether, innerhalb von 20 Minuten zugetropft. Nach einer Reaktionszeit von 1 Stunde bei 80°C wurde ein NCO-Gehalt von 1,0% ermittelt. Anschließend wurden 3,9 Tle 1-(2-Hydroxyethyl)-piperazin, gelöst in 20 Tln Diglykoldimethylether innerhalb von 10 Minuten bei 50°C zugetropft und der Inhalt des Reaktionsgefäßes 2 Stunden bei 80°C gerührt. Es wurde ein bräunlich gefärbtes, klares, niedrigviskoses Produkt mit einem Feststoffgehalt von 35,2% erhalten, das im IR-Spektrum keine NCO-Gruppen mehr aufwies. Mittleres Molgewicht des Feststoffes: 6700. Wurde dieses Additionsprodukt entsprechend Anwendungsbeispiel 1 auf C.I. Pigment Violet 19 aufgebracht, so wurden an einem damit pigmentierten TSA-NAD-Lack Glanzwerte von 90 erhalten. Der Vergleichsversuch ohne das Additionsprodukt führte zu Glanzwerten von 58.

Beispiel 7

In einem Rührgefäß wurden 7,5 Tle eines 4,4'-Diphenylmethandiisoyanat-Polymeren gemäß der idealisierten Struktur in Formel VIII (Viskosität bei 25°C 400 mPas) und 0,03 Tle Dibutylzinndilaurat in 20 Tln Methylglykolacetat gelöst und auf 50°C erwärmt. In diese Lösung wurden innerhalb von 10 Minuten 21,6 Tle eines Fettalkoholpolyglykolethers (ungefähre mittlere Kettenverteilung für den Cocosfettalkylrest $C_8$ 6%, $C_{10}$ 6%, $C_{12}$ 54%, $C_{14}$ 18%, $C_{16}$ 8%, $C_{18}$ 8%; mittleres Molgewicht 1080) in 30 Tln Methylglykolacetat zugetropft und der Ansatz noch 2 Stunden bei 80°C gerührt. Der NCO-Gehalt sank dabei von 3,2% zu Beginn der Reaktion auf 2,1%. In einem weiteren Reaktionsgefäß wurden 10,9 Tle eines Addukts von Stearylamin und 25 Mol Ethylenoxid (ungefähre mittlere Kettenverteilung für den Stearylrest $C_{14}$ 5%, $C_{16}$ 30%, $C_{18}$ 65%) sowie 2,5 Tle 3-Amino-1,2,4-triazol in 30 Tln Methylglykolacetat vorgelegt und auf 50°C erwärmt. Innerhalb von 30 Minuten ließ man zu dieser Lösung das klare, gelblich gefärbte, niedrigviskose Reaktionsprodukt der ersten Reaktionsstufe zulaufen, rührte den Ansatz noch 2 Stunden bei 80°C und erhielt ein bei Raumtemperatur leicht hellbraun gefärbtes, klares, niedrigviskoses Endprodukt mit einem Feststoffgehalt von 34,7%, bei dem keine NCO-Gruppen mehr nachzuweisen waren. Mittleres Molgewicht des Feststoffes: 4300.
Wurde dieses Additionsprodukt entsprechend Anwendungsbeispiel 3 auf C.I. Pigment Violet 19 aufgebracht, so wurden an damit pigmentierten TSA-NAD-Lackschichten Glanzwerte von 80 gemessen.

Beispiel 8

In einem Rührgefäß wurden 7,5 Tle eines 4,4'-Diphenylmethandiisodyanat-Polymeren gemäß der idealisierten Struktur in Formel VIII (Viskosität bei 25°C  250 mPas) in 20 Tln Methylglykolacetat gelöst, 0,04 Tle 1,4-Diazabicyclo-[2,2,2]octan zugegeben und auf 50°C erwärmt. Innerhalb von 15 Minuten wurden 22,4 Tle eines mit Ethylen- und Propylenoxid oxalkylierten linearen Fettalkohols (OH-Zahl 50) in 30 Tln Methylglykolacetat zugetropft und das Gemisch 2 Stunden bei 80°C gerührt. Der NCO-Gehalt fiel dabei von 2,9% zu Beginn der Reaktion auf 2,0% nach der Reaktion.
In einem zweiten Reaktionsgefäß wurden 10 Tle eines Polyethylenglykols (mittleres Molgewicht 2000), 3,5 Tle 1-(2-Hydroxyethyl)-pyrrolidin sowie 30 Tle N-Methylpyrrolidon vorgelegt und auf 50°C erwärmt. Anschließend wurde das Umsetzungsprodukt der ersten Reaktionsstufe innerhalb von 30 Minuten zugetropft und der Ansatz 2 Stunden bei 80°C gerührt. Man erhielt ein schwach bräunlich gefärbtes, etwas

trübes, niedrigviskoses Produkt mit einem Feststoffgehalt von 35,2%. Im IR-Spektrum konnten keine NCO-Gruppen mehr nachgewiesen werden. Mittleres Molgewicht des Feststoffes: 3900. Wurde dieses Additionsprodukt entsprechend Anwendungsbeispiel 3 auf C.I. Pigment Violet 19 aufgebracht, so wurden an damit pigmentierten AM-Lackschichten Glanzwerte von 89 gemessen.

Beispiel 9

In einem Rührgefäß wurden 7,5 Tle eines 4,4'-Diphenylmethandiisocyanat-Polymeren gemäß der idealisierten Struktur in Formel VIII (Viskosität bei 25°C 250 mPas), 20 Tle Methylglykolacetat und 0,5 Tle Dibutylzinndilaurat vorgelegt und auf 60°C erwärmt. In diese Lösung mit einem NCO-Gehalt von 8,5% wurden zunächst 23,7 Tle eines Fettalkoholpolyglykolethers auf Basis eines ungesättigten $C_{16}$-$C_{18}$-Alkohols (mittleres Molgewicht 1184) in 30 Tln Methylglykolacetat und anschließend 8 Tle eines Polyethylenglykols (mittleres Molgewicht 1000) in 20 Tln Methylglykolacetat innerhalb von 30 Minuten zugetropft. Man rührte den Ansatz 1 Stunde bei 100°C und fand einen NCO-Gehalt von 1,0%. In einem zweiten Reaktionsgefäß wurden 4,8 Tle N-Methyl-(2-hydroxymethyl)-piperidin in 10 Tln Methylglykolacetat vorgelegt und auf 60°C erwärmt. In diese Lösung ließ man innerhalb von 30 Minuten das Umsetzungsprodukt der ersten Reaktionsstufe zutropfen und rührte noch 1,5 Stunden bei 100°C. Man erhielt ein bräunlich gefärbtes, klares, niedrigviskoses Produkt mit einem Feststoffgehalt von 35,5%. Im IR-Spektrum konnten keine NCO-Gruppen mehr nachgewiesen werden. Mittleres Molgewicht des Feststoffes: 4700. Wurde dieses Additionsprodukt entsprechend Anwendungsbeispiel 1 auf C.I. Pigment Violet 19 aufgebracht, so wurden an einem damit pigmentierten AM-Lackschichten Glanzwerte von 86 gemessen.

Beispiel 10

In einem Rührgefäß wurden 7,5 Tle eines 4,4'-Diphenylmethandiisocyanat-Polymeren gemäß der idealisierten Struktur in Formel VIII (Viskosität bei 25°C 250 mPas) in 20 Tln Butylacetat vorgelegt, 0,04 Tle Dibutylzinndilaurat zugesetzt und auf 40°C erwärmt. Innerhalb von 15 Minuten wurden zu dieser Lösung mit einem NCO-Gehalt von 8,5% 24 Tle eines Polyglykolmonobutylethers (mittleres Molgewicht 1200, Ethylen-/Propylenoxidverhältnis 1:1), gelöst in 30 Tln Butylacetat, zugetropft. Man rührte 2 Stunden bei 70°C und fand einen NCO-Gehalt von 1,9%. In einem zweiten Reaktionsgefäß wurden 7,2 Tle eines Polyesters aus 6 Mol Hexandiol-1,6 und 5 Mol Adipinsäure (mittleres Molgewicht 1445) sowie 3,4 Tle 2-(1-Pyrrolidyl)-ethylamin in 30 Tln Butylacetat vorgelegt und auf 40°C erwärmt. Man ließ innerhalb von 30 Minuten das Reaktionsprodukt der ersten Teilreaktion zutropfen, rührte den Ansatz 2 Stunden bei 70°C und erhielt ein gelblich gefärbtes, klares, hochviskoses Produkt mit einem Feststoffgehalt von 34,5%. Im IR-Spektrum konnten keine NCO-Gruppen mehr nachgewiesen werden. Mittleres Molgewicht des Feststoffes: 5400. Wurde dieses Additionsprodukt entsprechend Anwendungsbeispiel 2 dem AM-Lack zugesetzt, so wurden hochglänzende Lackierungen mit Glanzwerten von 86 erhalten.

Beispiel 11

In einem Reaktionsgefäß wurden 7,5 Tle eines 4,4'-Diphenylmethandiisocyanat-Polymeren gemäß der idealisierten Struktur in Formel VIII (Viskosität bei 25°C 250 mPas) in 10 Tln Methylglykolacetat gelöst und nach Zugabe von 0,03 Tln 1,4-Diazabicyclo[2,2,2]octan auf 50°C erwärmt. Zu dieser Lösung wurden 20 Tle eines Polyglykolmonomethylethers

(mittleres Molgewicht 1000, Ethylen-/Propylenoxidverhältnis 4:1) in 20 Tln Methylglykolacetat rasch zugegeben und die Mischung 2 Stunden bei 80°C gerührt. Man erhielt eine schwach bräunlich gefärbte, klare, niedrigviskose Lösung mit einem NCO-Gehalt von 2,7%. In einem zweiten Reaktionsgefäß wurden 16 Tle eines Addukts aus 1 Mol Ethylenglykol und 17 Mol ε-Caprolacton (mittleres Molgewicht 2000), 5 Tle 2-Methoxy-4-nitranilin und 50 Tle Methylglykolacetat vorgelegt und auf 50°C erwärmt. Zu dieser Lösung wurde innerhalb von 15 Minuten das Reaktionsprodukt der ersten Reaktionsstufe zugetropft und der Ansatz anschließend 2 Stunden bei 80°C gerührt. Man erhielt ein bräunlich gefärbtes, niedrigviskoses, klares Produkt mit einem Feststoffgehalt von 37,8%. Im IR-Spektrum konnten keine NCO-Gruppen mehr festgestellt werden. Mittleres Molgewicht des Feststoffes: 4200. Wurde das Reaktionsprodukt entsprechend Anwendungsbeispiel 1 auf C.I. Pigment Violet 19 aufgebracht, so wurden an einem damit pigmentierten AM-Lack Glanzwerte von 83 gemessen.

Beispiel 12

In einem Rührgefäß wurden 29,8 Tle eines Polyesters aus 1 Mol Decanol und 16 Mol ε-Caprolacton, 10 Tle eines Polyethylenglykols (mittleres Molgewicht 2000), 4,6 Tle 4-(2-Hydroxyethyl)-morpholin, 25 Tle Xylol, 25 Tle Dimethylsulfoxid sowie 0,04 Tle 1,4-Diazabicyclo[2,2,2]octan vorgelegt und auf 60°C erwärmt. Zu dieser Lösung wurden innerhalb von 15 Minuten 7,5 Tle eines 4,4'-Diphenylmethandiisocyanat-Polymeren gemäß der idealisierten Struktur in Formel VIII, gelöst in 30 Tln Butylacetat, zugetropft und 2 Stunden bei 90°C gerührt. Man erhielt ein bräunlich gefärbtes, niedrigviskoses, klares Produkt mit einem Feststoff gehalt von 39,3%, das im IR-Spektrum keine NCO-Banden mehr aufwies. Mittleres Molgewicht des Feststoffes 4800. Wurde

dieses Additionsprodukt entsprechend Anwendungsbeispiel 2 dem AM-Lack zugesetzt, so wurden hochglänzende Lackierungen mit Glanzwerten von 85 erhalten.

Beispiel 13

In einem Rührgefäß wurden 7,5 Teile eines 4,4'-Diphenylmethandiisocyanat-Polymeren gemäß der idealisierten Struktur in Formel VIII (Viskosität bei 25°C 250 mPas) in 10 Tln Diglykoldimethylether gelöst, 0,04 Tle Dibutylzinndilaurat zugesetzt und auf 60°C erwärmt. In diese Lösung mit einem NCO-Gehalt von 13,3% wurde innerhalb von 10 Minuten eine Mischung aus 7,8 Tln eines Addukts aus 1 Mol Polyethylenglykol (mittleres Molgewicht 600) und 6 Mol ε-Caprolacton, 14 Tle eines mit Ethylen- und Propylenoxid oxalkylierten linearen Fettalkohols (mittleres Molgewicht 930), 20 Tln N-Methylpyrrolidon und 10 Tln Diglykoldimethylether zugetropft. Nach einer Reaktionszeit von 2 Stunden bei 100°C betrug der NCO-Gehalt 1,8%. Anschließend wurden 4,4 Tle 2-Aminobenzimidazol in 30 Tln Diglykoldimethylether und 10 Tln N-Methylpyrrolidon gelöst und bei 60°C innerhalb von 20 Minuten zugetropft. Aufgrund starker Viskositätserhöhung wurden während des Zutropfens weitere 80 Tle Diglykoldimethylether zugegeben. Man ließ 2 Stunden bei 100°C rühren und erhielt ein bräunlich gefärbtes, trübes, niedrigviskoses Produkt mit einem Feststoffgehalt von 17,2%. Im IR-Spektrum konnten keine NCO-Gruppen mehr nachgewiesen werden. Mittleres Molgewicht des Feststoffes: 5500. Wurde das Additionsprodukt entsprechend Anwendungsbeispiel 2 dem AM-Lack zugesetzt, so wurden hochglänzende Lackierungen mit Glanzwerten von 87 erhalten.

Beispiel 14

In einem Rührgefäß wurden 7,5 Tle eines 4,4'-Diphenylmethandiisocyanat-Polymeren gemäß der idealisierten Struk-

tur in Formel VIII (Viskosität bei 25°C 130 mPas) in 10 Tln Methylglykolacetat gelöst, 0,04 Tle Dibutylzinndilaurat zugegeben und auf 50°C erwärmt. In diese Lösung mit einem NCO-Gehalt von 13,0% wurde innerhalb von 15 Minuten eine Mischung aus 23,9 Tln eines Polyesters aus 1 Mol Decanol und 7 Mol ε-Caprolacton, 17,6 Tln eines Blockcopolymerisats aus 60 Gew.-% Propylen- und 40 Gew.-% Ethylenoxid (mittleres Molgewicht 2930) und 30 Tln Methylglykolacetat zugetropft. Man rührte den Ansatz 2 Stunden bei 80°C und ermittelte einen NCO-Gehalt von 0,9%. In einem zweiten Reaktionsgefäß wurden 2,1 Tle Diethylentriamin in 20 Tln Methylglykolacetat gelöst und auf 50°C erwärmt. Zu dieser Lösung wurden innerhalb von 30 Minuten das Umsetzungsprodukt der ersten Reaktionsstufe und weitere 30 Tle Methylglykolacetat zugetropft und das Reaktionsgemisch 2 Stunden bei 80°C gerührt. Man erhielt ein gelblich gefärbtes, klares, gut fließfähiges Produkt mit einem Feststoffgehalt von 36,2%. Im IR-Spektrum konnten keine NCO-Gruppen mehr nachgewiesen werden. Mittleres Molgewicht des Feststoffes: 4400. Wurde das Additionsprodukt entsprechend Anwendungsbeispiel 4 eingesetzt, erhielt man eine stabile Pigmentdispersion. An damit pigmentierten TSA-NAD-Lackschichten wurden Glanzwerte von 88 gemessen.

Beispiel 15

In einem Rührgefäß wurden 7,5 Tle eines 4,4'-Diphenylmethandiisocyanat-Polymeren gemäß der idealisierten Struktur in Formel VIII (Viskosität bei 25°C 200 mPas) in 10 Tln Methylglykolacetat gelöst, 0,03 Tle 1,4-Diazabicyclo-[2,2,2]octan zugesetzt und auf 50°C erwärmt. In diese Lösung mit einem NCO-Gehalt von 13,7% wurde innerhalb von 20 Minuten eine Mischung aus 9,7 Tln eines Addukts von Nonylphenol und 8 Mol Ethylenoxid, 21,2 Tln eines oxethylierten Reaktionsprodukts aus dem Bisglycidylether von 2,2-Bis(4-hydroxyphenyl)propan und Triisobutylphenol (mittleres Molgewicht 5300),

4,4 Tln N-(3-Aminopropyl)-imidazol und 40 Tln Methylglykolacetat zugetropft. Man rührte den Ansatz 2 Stunden bei 80°C und erhielt ein leicht gelblich gefärbtes, trübes, fließfähiges Produkt mit einem Feststoffgehalt von 46.1%. Im IR-Spektrum konnten keine NCO-Gruppen mehr nachgewiesen werden. Mittleres Molgewicht des Feststoffes: 6200. Wurde das Reaktionsprodukt entsprechend Anwendungsbeispiel 2 dem AM-Lack zugesetzt, so wurden hochglänzende Lackierungen mit Glanzwerten von 86 erhalten.

Beispiel 16

In einem Rührgefäß wurden 7,5 Tle eines 4,4'-Diphenylmethandiisocyanat-Polymeren gemäß der idealisierten Struktur in Formel VIII (Viskosität bei 25°C 400 mPas) in 10 Tln Diglykoldimethylether vorgelegt, 0,03 Tle 1,4-Diazabicyclo[2,2,2]octan zugegeben und auf 60°C erwärmt. In diese Lösung mit einem NCO-Gehalt von 13,3% wurden innerhalb von 15 Minuten 10,6 Tle eines Addukts von 1 Mol Nonylphenol und 15 Mol Ethylenoxid in 30 Tln Diglykoldimethylether zugetropft. Man ließ 2 Stunden bei 100°C rühren und ermittelte einen NCO-Gehalt von 3,2%. In einem zweiten Reaktionsgefäß wurden 9,6 Tle eines Addukts von 1 Mol Oleylamin und 12 Mol Ethylenoxid (ungefähre mittlere Kettenverteilung für den Oleylrest $C_{12}$ 1%, $C_{14}$ 4%, $C_{16}$ 12%, $C_{18}$ 83%), 3,1 Tle N-(3-Aminopropyl)-imidazol und 30 Tle Cyclohexanon vorgelegt und auf 60°C erwärmt. In diese Lösung ließ man innerhalb von 20 Minuten das Umsetzungsprodukt der ersten Reaktionsstufe zutropfen, rührte den Ansatz noch 2 Stunden bei 100°C und erhielt ein bräunlich gefärbtes, etwas trübes, niedrigviskoses Produkt mit einem Feststoffgehalt von 30,6%. Im IR-Spektrum konnten keine NCO-Gruppen mehr nachgewiesen werden. Mittleres Molgewicht des Feststoffes: 3800. Wurde das Additionsprodukt aus Beispiel 16 entsprechend Anwendungsbeispiel 2 dem AM-Lack zugesetzt, so wurden hochglänzende Lackierungen mit Glanzwerten von 85 erhalten. Ersetzte man N-(3-Aminopropyl)-imidazol durch 3-Amino-1,2,4-triazol, wurden Produkte mit vergleichbaren Eigenschaften erhalten.

Beispiel 17

In einem Rührgefäß wurden 7,5 Tle eines 4,4'-Diphenylmethandiisocyanat-Polymeren gemäß der idealisierten Struktur in Formel VIII (Viskosität bei 25°C 400 mPas) in 20 Tln Methylethylketon gelöst, 0,04 Tle Dibutylzinndilaurat zugesetzt und auf 50°C erwärmt. In diese Lösung mit einem NCO-Gehalt von 8,5% ließ man innerhalb von 30 Minuten eine Mischung aus 19,3 Tln eines Fettalkoholpolyglykolethers (ungefähre mittlere Kettenverteilung für den Fettalkylrest $C_8$ 6%, $C_{10}$ 6%, $C_{12}$ 54%, $C_{14}$ 18%, $C_{16}$ 8%, $C_{18}$ 8%; mittleres Molgewicht 1000) und 50 Tln Diglykoldimethylether zutropfen. Man rührte 2 Stunden bei 80°C und fand einen NCO-Gehalt von 0,9%. In einem zweiten Reaktionsgefäß wurden 3,1 Tle N-(3-Aminopropyl)-imidazol in 30 Tln Diglykoldimethylether gelöst und auf 50°C erwärmt. In diese Lösung ließ man innerhalb von 30 Minuten das Umsetzungsprodukt der ersten Reaktionsstufe zutropfen und rührte den Ansatz noch 1,5 Stunden bei 80°C. Man erhielt ein klares, gelblich gefärbtes, niedrigviskoses Produkt mit einem Feststoffgehalt von 25,3%. Im IR-Spektrum konnten keine NCO-Gruppen mehr nachgewiesen werden. Mittleres Molgewicht des Feststoffes: 3500. Wurde das Additionsprodukt entsprechend Anwendungsbeispiel 2 dem AM-Lack zugesetzt, so wurden hochglänzende Lackierungen mit Glanzwerten von 88 erhalten. Wurde N-(3-Aminopropyl)-imidazol durch Imidazol ersetzt, so wurden Produkte mit etwas weniger guten Eigenschaften erhalten.

Anwendungsbeispiel 6

87 Tle eines 34,5 %igen wäßrigen Preßkuchens von C.I. Pigment Red 188 wurden in 273 Tln Wasser angerührt und die erhaltene Pigmentsuspension mit einer Lösung von 4,7 Tln der Lösung des Additionsprodukts aus Beispiel 7 in 120,6 Tln Chlorbenzol versetzt. Unter intensivem Rühren wurde die Pigmentsuspension auf 90°C erhitzt und 1 Stunde bei dieser Temperatur gehalten. Anschließend wurden die organischen Lösemittel durch Wasserdampfdestillation entfernt. Die erhaltene wäßrige Pigmentsuspension wurde filtriert, der Filterkuchen getrocknet und anschließend gemahlen. Wurden in dem beschriebenen AM-Lack 10 % des so behandelten Pigments dispergiert und damit erhaltene Lackierungen bei 130°C eingebrannt, so wurde daran ein Glanzwert von 83 gemessen. Ersetzte man bei der beschriebenen thermischen Behandlung des Azopigments die 4,7 Tle des Additionsprodukts aus Beispiel 7 durch Chlorbenzol, so wurden Lackierungen mit einem Glanzwert von 65 erhalten.

Anwendungsbeispiel 7

180 Tle eines 27,8 %igen Preßkuchens von C.I. Pigment Orange 36 wurden in 260 Tln Wasser angerührt und nach Zusatz von 180 Tln o-Dichlorbenzol in einem geschlossenen Gefäß unter Rühren auf 130°-135°C erhitzt und 1 Stunde bei dieser Temperatur gehalten. Nach dem Abkühlen auf 85°C wurden der Suspension 4 Tle der Lösung des Additionsprodukts aus Beispiel 7, gelöst in 25 Tln o-Dichlorbenzol, zugesetzt und anschließend durch Einleiten von Wasserdampf die organischen Lösemittel destillativ entfernt. Das aus der wäßrigen Suspension abfiltrierte Pigment bewirkte nach dem Trocknen, Mahlen und Einarbeiten in den TSA-NAD-Lack bei 10 %iger Pigmentkonzentration eine deutlich niedrigere Viskosität des Lackes als ein im Vergleichsversuch erhaltenes Pigment ohne Zusatz des Additionsprodukts aus Beispiel 7.

0194349

Anwendungsbeispiel 8

650 Tle einer Pigmentsuspension, bestehend aus 28 Tln der deckenden γ-Modifikation von C.I. Pigment Violet 19, 130 Tln Isobutanol und 492 Tln Wasser, wie sie nach dem Finish erhalten wurde, erwärmte man unter Rühren auf 50°C. Bei dieser Temperatur wurden 7,5 Tle der 29,9 %igen Lösung des Additionsprodukts aus Beispiel 4, gelöst in 15 Tln Propionsäure, innerhalb 30 Minuten zugetropft. Man rührte 3 Stunden bei 50°C, stellte mit verdünnter Natronlauge auf pH 7,5 und rührte weitere 2 Stunden bei 50°C. Anschließend wurde das Isobutanol mit Wasserdampf abdestilliert, das Pigment abfiltriert, mit Wasser gewaschen und bei 80°C getrocknet. Wurde dieses so erhaltene Pigment in einer Konzentration von 7 % in dem beschriebenen AM-Lack dispergiert, so wurde bei damit erstellten hochglänzenden Lackierungen ein Glanzwert von 84 gemessen. Wurden die 7,5 Tle des Additionsprodukts aus Beispiel 4 durch 7,5 Tle Wasser ersetzt, so wurden matte Lackierungen mit einem Glanzwert von 29 erhalten.

PATENTANSPRÜCHE

1. Additionsverbindungen, bestehend aus

50 Äquivalent-% Struktureinheiten R der Formel

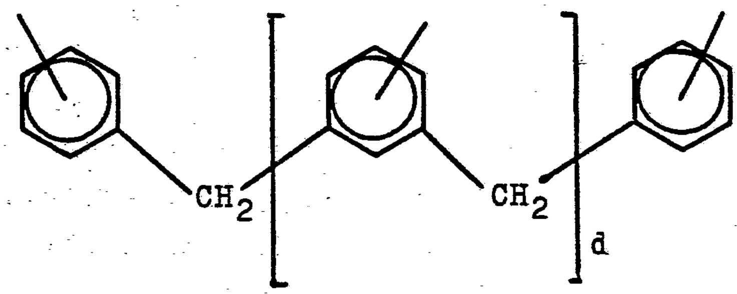 ,

5 bis 40 Äquivalent-% Struktureinheiten der Formel (I)

$-NH-CO-R^1-R^3-R^2$ (I)

5 bis 40 Äquivalent-% Struktureinheiten der Formel (II)

$-NH-CO-(R^4)_a-R^5-R^6$ (II)

0 bis 25 Äquivalent-% Struktureinheiten der Formel (III)

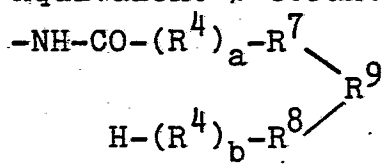 (III)

und/oder

0 bis 25 Äquivalent-% Struktureinheiten der Formel (IV)

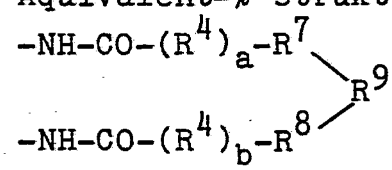 (IV),

wobei (III) und (IV) nicht gleichzeitig 0 Äquivalent-% sein können und die Summe (I) + (II) + (III) + (IV) 50 Äquivalent-% beträgt, mit einem Molekulargewicht von 1 500 bis 25 000, löslich in inerten Lösemitteln, wobei

d für eine ganze Zahl von 0 bis 6,

$R^1$ für eine direkte Bindung, -O-, $-NR^{10}R^{11}-$, worin $R^{10}$ eine direkte Bindung oder $C_1$-$C_{20}$-Alkylen und $R^{11}$ -H, -OH oder $-NH_2$ bedeuten,

$R^2$ für -H, -OH oder $-N(R^3R^{11})(R^{10}R^{12})$, worin $R^{10}$ und $R^{11}$ die obige Bedeutung haben und $R^{12}$ -H, -OH oder $-NH_2$ und

$R^3$ eine direkte Bindung oder $C_1$-$C_6$-Alkylen bedeuten, oder

$R^2$ für ein gesättigtes oder ungesättigtes heterocyclisches oder ein aromatisches Ringsystem mit 2 bis 16 C-Atomen, welches gegebenenfalls substituiert sein kann durch $-R^{13}$, Halogen, $-OR^{13}$, $-NR^{13}R^{14}$, $-COOR^{13}$, $-CONR^{13}R^{14}$, $-NR^{13}-COR^{14}$, -CN, $-CF_3$ oder $-NO_2$, wobei

$R^{13}$ und $R^{14}$ unabhängig voneinander -H oder $C_1$-$C_4$-Alkyl

bedeuten, und wobei mindestens einer der Reste $R^1$ und $R^2$ ein Stickstoffatom enthalten muß und $R^1$ nur dann eine direkte Bindung ist, wenn $R^2$ für ein heterocyclisches Ringsystem steht, welches über den Ringstickstoff verknüpft ist, und $R^3$ ebenfalls für eine direkte Bindung steht,

$R^4$ unabhängig voneinander für $-O-R^{15}-$, $-O-R^{15}-CO-$ oder $-O-R^{15}-O-CO-R^{16}-CO-$
wobei
$R^{15}$ $C_2$-$C_{20}$-Alkylen oder Phenylethylen und
$R^{16}$ eine direkte Bindung, $C_1$-$C_{12}$-Alkylen, $C_6$-$C_{12}$-Arylen oder $C_6$-$C_{12}$-Aralkylen bedeuten, und wobei die Reste $R^4$ in den Formeln (II), (III), und (IV) jeweils verschieden sein können,

a für eine ganze Zahl von 2 bis 200,

$R^5$ für -O-, -S-, -NH- oder -NR'-, wobei R' eine der für $R^6$ genannten Bedeutungen hat,

$R^6$ für einen einwertigen aliphatischen, aromatischen oder araliphatischen Rest mit 1 bis 40 C-Atomen,

$R^7$ und $R^8$ unabhängig voneinander für -O-, -S-, -NR"- oder eine direkte Bindung, wobei R" eine der für $R^6$ genannten Bedeutungen hat,

$R^9$ für eine direkte Bindung oder einen zweiwertigen aliphatischen oder araliphatischen Rest mit 2 bis 200 C-Atomen,
wobei $R^7$, $R^8$ und $R^9$ nicht gleichzeitig eine direkte Bindung sein sollen, und

b für eine ganze Zahl von 2 bis 200
stehen.

2. Additionsverbindung nach Anspruch 1, dadurch gekennzeichnet, daß
$R^1$ für -O- oder -NH-,
$R^2$ für ein gesättigtes oder ungesättigtes heterocyclisches Ringsystem mit 5 bis 6 Ringatomen, wobei mindestens einer der Reste $R^1$ und $R^2$ ein Stickstoffatom enthält,
$R^3$ für eine Alkylengruppe mit 1 bis 6 C-Atomen steht.

3. Additionsverbindung nach Anspruch 1 oder 2, dadurch gekennzeichnet, daß in Struktureinheiten der Formel (II)
$R^4$ für $-O-R^{15}-$, $R^5$ für -O-
$R^{15}$ für $-CH_2CH_2-$, $-CH(CH_3)CH_2-$ und/oder $-CH_2CH(CH_3)-$
$R^6$ für einen Alkyl-, Phenyl-, Naphthyl-, Alkylphenyl- oder Alkylnaphthylrest mit 1 bis 30 C-Atomen,
a für eine Zahl von 5 bis 80 steht und
das Molekulargewicht des Restes $-(R^4)_a-R^5-R^6$ zwischen 398 und 10 000 liegt.

4. Additionsverbindung nach Anspruch 1 oder 2, dadurch gekennzeichnet, daß in Struktureinheiten der Formel (II)

$R^4$ für $-O-R^{15}-CO-$,
$R^{15}$ für Pentamethylen,
a für eine Zahl von 4 bis 30 und
$R^5$ und $R^6$ die obengenanne Bedeutung hat sowie der Rest $-(R^4)_a-R^5-R^6$ ein Molekulargewicht zwischen 398 bis 10 000 hat.

5. Additionsverbindung nach einem der Ansprüche 1 bis 4, dadurch gekennzeichnet, daß in Struktureinheiten der Formel (III) oder (IV) die Reste

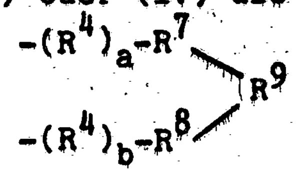

ein Molekulargewicht zwischen 397 und 9999 haben.

6. Mittel zum Dispergieren von Feststoffen in organischen Medien, dadurch gekennzeichnet, daß es eine Additionsverbindung nach einem der Ansprüche 1 bis 5 enthält.

7. Verfahren zur Herstellung der Additionsverbindungen gemäß Anspruch 1 durch Umsetzung eines Polyisocyanats mit Verbindungen mit aktivem Wasserstoff, dadurch gekennzeichnet, daß man

(1) 50 Äquivalent-% eines Polyisocyanats der Formel

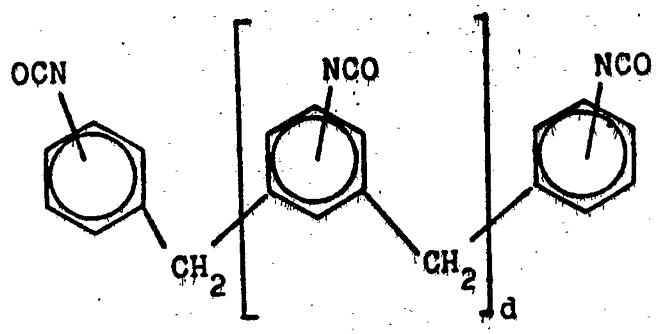

(VIII),

worin d eine ganze Zahl von 0 bis 6 ist,

mit

(2) 5 bis 40 Äquivalent-% eines Amins der Formel

$$H-R^1-R^3-R^2 ,$$

worin $R^1$, $R^2$ und $R^3$ die im Anspruch 1 angegebenen Bedeutungen haben,
und

(3) 5 bis 40 Äquivalent-% eines einwertigen Polymeren der Formel

$$H-(R^4)_a-R^5-R^6 ,$$

worin $R^4$, $R^5$, $R^6$ und a die im Anspruch 1 angegebenen Bedeutungen haben,

und

(4) 1 bis 25 Äquivalent-% eines zweiwertigen Polymeren der Formel

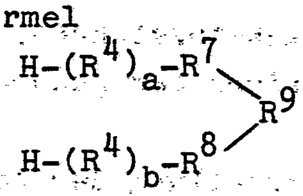

worin $R^4$, $R^7$, $R^8$, $R^9$ und a die im Anspruch 1 angegebenen Bedeutungen haben und b eine ganze Zahl von 2 bis 200 ist,

wobei die Summe der Reaktionspartner (2) bis (4) 50 Äquivalent-% beträgt,

in einem inerten Lösemittel bei einer Temperatur von 0° bis 120°C umsetzt.

8. Verfahren nach Anspruch 7, dadurch gekennzeichnet, daß in einer ersten Reaktionsstufe das Polyisocyanat vorgelegt und mit dem einwertigen Polymeren umgesetzt wird und das Produkt der Umsetzung in der zweiten Reaktionsstufe zu einem Gemisch aus dem Amin und dem zweiwertigen Polymeren gegeben wird.

9. Verwendung der Additionsverbindung gemäß Anspruch 1 zur Dispergierung von Feststoffen in organischen Medien.